# EUROPÄISCHE PATENTANMELDUNG

(11) **EP 2 993 009 A1**
(43) Veröffentlichungstag der Anmeldung: **09.03.2016**
(21) Anmeldenummer: 14003097.4
(22) Anmeldetag: 08.09.2014
(51) Int. Cl.: B28D 1/04, B28D 7/00

(54) **Verfahren zur Steuerung eines Wandsägesystems beim Erstellen eines Trennschnittes**

(71) Anmelder: HILTI Aktiengesellschaft, 9494 Schaan (LI)
(72) Erfinder: Kaneider, Wilfried, AT-6830 Rankweil (AT); Stevic, Dragan, AT-6800 Feldkirch-Tosters (AT); Bereuter, Christian, AT-6951 Lingenau (AT); Hricko, Peter, CH-9470 Buchs (CH)
(74) Vertreter: Hilti Aktiengesellschaft Corporate Intellectual Property

(57) **Zusammenfassung**

Verfahren zur Steuerung eines Wandsägesystems (10) beim Erstellen eines Trennschnittes in einem Werkstück (24) zwischen einem ersten und zweiten Endpunkt. Das Wandsägesystem (10) umfasst eine Wandsäge (12) mit einem Sägekopf (14), einem schwenkbaren Sägearm (17), einem Sägeblatt (16) und einem Blattschutz (21). Der Trennschnitt wird in mehreren Hauptschnitten durchgeführt, wobei die Parameter der Hauptschnitte (Hauptschnittwinkel) vor dem Start in einer Hauptschnittfolge festgelegt werden. Die Bewegung des Sägekopfes (14) wird an den Endpunkten so gesteuert, dass nach der Schwenkbewegung des Sägearms (17) in den Hauptschnittwinkel des folgenden Hauptschnittes eine, dem Endpunkt zugewandte Begrenzung der Wandsäge (12) mit dem Endpunkt zusammenfällt. Die Begrenzung der Wandsäge (12) wird bei einem freien Endpunkt durch einen oberen Austrittspunkt des Sägeblattes (16) gebildet und bei einem Hindernis durch die Sägeblattkante des Sägeblattes (16), wenn die Bearbeitung ohne Blattschutz (21) erfolgt, oder durch die Blattschutzkante des Blattschutzes (21), wenn die Bearbeitung mit Blattschutz (21) erfolgt.

## Beschreibung

### Technisches Gebiet

Die vorliegende Erfindung betrifft ein Verfahren zur Steuerung eines Wandsägesystems beim Erstellen eines Trennschnittes gemäß dem Oberbegriff des Anspruchs 1.

### Stand der Technik

Aus EP 1 693 173 B1 ist ein Verfahren zur Steuerung eines Wandsägesystems beim Erstellen eines Trennschnittes in einem Werkstück zwischen einem ersten Endpunkt und einem zweiten Endpunkt bekannt. Das Wandsägesystem umfasst eine Führungsschiene und eine Wandsäge mit einem Sägekopf, einer motorischen Vorschubeinheit, die den Sägekopf parallel zu einer Vorschubrichtung entlang der Führungsschiene verschiebt und mindestens einem Sägeblatt, das an einem Sägearm des Sägekopfes befestigt und von einem Antriebsmotor um eine Drehachse angetrieben wird. Der Sägearm ist mittels eines Schwenkmotors um eine Schwenkachse schwenkbar ausgebildet. Durch eine Schwenkbewegung des Sägearms um die Schwenkachse wird die Eindringtiefe des Sägeblattes in das Werkstück verändert. Die motorische Vorschubeinheit umfasst einen Führungsschlitten und einen Vorschubmotor, wobei der Sägekopf auf dem Führungsschlitten angebracht und über den Vorschubmotor entlang der Führungsschiene verschoben wird. Zur Überwachung des Wandsägesystems ist eine Sensoreinrichtung mit einem Schwenkwinkelsensor und einem Wegsensor vorgesehen. Der Schwenkwinkelsensor misst den momentanen Schwenkwinkel des Sägearms und der Wegsensor misst die aktuelle Position des Sägekopfes auf der Führungsschiene. Die gemessenen Werte für den aktuellen Schwenkwinkel des Sägearms und die aktuelle Position des Sägekopfes werden regelmäßig an eine Kontrolleinheit der Wandsäge übermittelt.

Das bekannte Verfahren zur Steuerung eines Wandsägesystems ist in einen Vorbereitungsteil und eine, von der Kontrolleinheit gesteuerten Bearbeitung des Trennschnittes unterteilt. Im Vorbereitungsteil legt der Bediener zumindest den Sägeblattdurchmesser des Sägeblattes, die Positionen des ersten und zweiten Endpunktes in Vorschubrichtung und die Endtiefe des Trennschnittes fest; weitere Parameter können das Material des zu bearbeitenden Werkstückes und die Abmessungen von eingebetteten Armierungseisen sein. Aus den eingegebenen Parametern bestimmt die Kontrolleinheit für den Trennschnitt eine geeignete Hauptschnittfolge von Hauptschnitten, wobei die Hauptschnittfolge zumindest einen ersten Hauptschnitt mit einem ersten Hauptschnittwinkel des Sägearms und einem ersten Durchmesser des verwendeten Sägeblattes sowie einen folgenden zweiten Hauptschnitt mit einem zweiten Hauptschnittwinkel des Sägearms und einem ersten Durchmesser des verwendeten Sägeblattes umfasst.

Nach dem Start der gesteuerten Bearbeitung wird der Sägekopf in eine Startposition positioniert. In der Startposition wird der Sägearm in einer negativen Drehrichtung um die Schwenkachse geschwenkt und unter dem negativen ersten Hauptschnittwinkel angeordnet. Der Sägekopf wird in einer positiven Vorschubrichtung entlang der Führungsschiene in Richtung des zweiten Endpunktes verfahren, wobei sich der Sägearm bei der Bearbeitung in einer ziehenden Anordnung befindet. Vor dem Erreichen des zweiten Endpunktes wird der Sägekopf angehalten und in einer, zur positiven Vorschubrichtung entgegen gerichteten, negativen Vorschubrichtung hinreichend weit zurückgesetzt. Der Sägearm wird in einer, zur negativen Drehrichtung entgegen gerichteten, positiven Drehrichtung aus dem negativen ersten Hauptschnittwinkel in einen positiven Hauptschnittwinkel des Sägearms umgeschwenkt.

In einer ersten Variante wird der Sägearm aus dem negativen ersten Hauptschnittwinkel in den positiven ersten Hauptschnittwinkel umgeschwenkt und der Sägekopf wird in der positiven Vorschubrichtung auf den zweiten Endpunkt zu bewegt, wobei sich der Sägearm in einer stoßenden Anordnung befindet. Bei Erreichen des zweiten Endpunktes wird die Vorschubrichtung umgekehrt und der Sägekopf wird in der negativen Vorschubrichtung auf den ersten Endpunkt zu bewegt, wobei sich der Sägearm in einer ziehenden Anordnung befindet. Vor dem ersten Endpunkt wird der Sägekopf angehalten und in der positiven Vorschubrichtung hinreichend weit zurückgesetzt. Der Sägearm wird aus dem positiven ersten Hauptschnittwinkel in den negativen ersten Hauptschnittwinkel umgeschwenkt und der Sägekopf wird in der negativen Vorschubrichtung auf den ersten Endpunkt zu bewegt, wobei sich der Sägearm in einer stoßenden Anordnung befindet.

In einer zweiten Variante wird der Sägearm aus dem negativen ersten Hauptschnittwinkel in den positiven zweiten Hauptschnittwinkel umgeschwenkt und der Sägekopf wird in der positiven Vorschubrichtung auf den zweiten Endpunkt zu bewegt, wobei sich der Sägearm in einer stoßenden Anordnung befindet. Bei Erreichen des zweiten Endpunktes wird die Vorschubrichtung umgekehrt und der Sägekopf wird in der negativen Vorschubrichtung auf den ersten Endpunkt zu bewegt, wobei sich der Sägearm in einer ziehenden Anordnung befindet.

Vor dem ersten Endpunkt wird der Sägekopf angehalten und in der positiven Vorschubrichtung hinreichend weit zurückgesetzt. Der Sägearm wird aus dem negativen zweiten Hauptschnittwinkel in einen positiven Hauptschnittwinkel umgeschwenkt und der Sägekopf wird in der negativen Vorschubrichtung auf den ersten Endpunkt zu bewegt, wobei sich der Sägearm in einer stoßenden Anordnung befindet. Wenn der zweite Hauptschnitt den letzten Hauptschnitt darstellt, wird der Sägearm in den positiven zweiten Hauptschnittwinkel umgeschwenkt. Wenn ein dritter Hauptschnitt mit einem dritten Hauptschnittwinkel durchgeführt wird, wird der Sägearm aus dem negativen zweiten Hauptschnittwinkel in den positiven dritten Hauptschnittwinkel des dritten Hauptschnittes umgeschwenkt. Die Verfahrensschritte werden solange wiederholt, bis die Endtiefe des Trennschnittes erreicht ist.

Das bekannte Verfahren zur Steuerung eines Wandsägesystems hat den Nachteil, dass der Sägekopf vor der Bearbeitung in stoßender Anordnung des Sägearms zurückgesetzt wird. Beim Zurücksetzen erfolgen lediglich eine Positionierung des Sägekopfes und keine Bearbeitung des Werkstückes. Die zur Positionierung erforderliche Zeit verlängert vor allem bei kurzen Schnitten die Nebenzeiten.

### Darstellung der Erfindung

Die Aufgabe der vorliegenden Erfindung besteht darin, ein Verfahren zur Steuerung eines Wandsägesystems mit einer hohen Bearbeitungsqualität zu entwickeln, bei dem die Nebenzeiten zum Positionieren des Sägekopfes und des Sägearms reduziert sind.

Diese Aufgabe wird bei dem eingangs genannten Verfahren zur Steuerung eines Wandsägesystems erfindungsgemäß durch die Merkmale des unabhängigen Anspruchs gelöst. Vorteilhafte Weiterbildungen sind in den abhängigen Ansprüchen angegeben.

Erfindungsgemäß ist vorgesehen, dass der Sägekopf bei der von der Kontrolleinheit gesteuerten Bearbeitung so verfahren wird, dass nach der Schwenkbewegung des Sägearms in den negativen zweiten Hauptschnittwinkel eine, dem zweiten Endpunkt zugewandte zweite Begrenzung der Wandsäge mit dem zweiten Endpunkt zusammenfällt, wobei die zweite Begrenzung der Wandsäge durch einen, dem zweiten Endpunkt zugewandten, zweiten oberen Austrittspunkt des verwendeten Sägeblattes an einer Oberseite des Werkstückes gebildet wird, wenn der zweite Endpunkt einen freien Endpunkt ohne Hindernis darstellt, durch eine, dem zweiten Endpunkt zugewandte, zweite Sägeblattkante des verwendete Sägeblattes, wenn der zweite Endpunkt ein Hindernis darstellt und die Bearbeitung ohne Blattschutz erfolgt, und durch eine, dem zweiten Endpunkt zugewandte, zweite Blattschutzkante des verwendete Blattschutzes, wenn der zweite Endpunkt ein Hindernis darstellt und die Bearbeitung mit Blattschutz erfolgt.

Das erfindungsgemäße Verfahren zur Steuerung eines Wandsägesystems hat den Vorteil, dass eine Bearbeitung mit einem ziehend und stoßend angeordneten Sägearm möglich ist und Nebenzeiten zum Positionieren des Sägekopfes durch eine entsprechende Positionssteuerung des Sägekopfes reduziert sind. Ein schmaler Schnittspalt wird dadurch erreicht, dass der erste Hauptschnitt der Hauptschnittfolge grundsätzlich mit einem ziehend angeordneten Sägearm erfolgt und das Sägeblatt bei den folgenden Hauptschnitten mit stoßend angeordnetem Sägearm durch den schmalen Schnittspalt des ersten Hauptschnittes geführt wird. Ein Trennschnitt, bei dem der Sägearm abwechselnd ziehend und stoßend angeordnet wird, hat den Vorteil, dass die zum Positionieren des Sägekopfes und Schwenken des Sägearms notwendigen Nebenzeiten gegenüber einer Bearbeitung mit einem ausschließlich ziehend angeordneten Sägearm reduziert sind.

Bevorzugt werden vor dem Start der von der Kontrolleinheit gesteuerten Bearbeitung zusätzlich eine Sägearmlänge des Sägearms, die als Abstand zwischen der Schwenkachse des Sägearms und der Drehachse des Sägeblattes definiert ist, und ein Abstand zwischen der Schwenkachse und der Oberseite des Werkstückes festgelegt. Für eine gesteuerte Bearbeitung eines Trennschnittes müssen der Kontrolleinheit verschiedene Parameter bekannt sein. Dazu gehören die Sägearmlänge, die eine feste gerätespezifische Größe der Wandsäge darstellt, und der senkrechte Abstand zwischen der Schwenkachse und der Oberfläche des Werkstückes, die neben der Geometrie der Wandsäge auch von der Geometrie der verwendeten Führungsschiene abhängt.

Besonders bevorzugt wird vor dem Start der gesteuerten Bearbeitung zusätzlich eine erste Breite für einen, beim ersten Hauptschnitt, verwendeten Blattschutz und eine zweite Breite für einen, beim zweiten Hauptschnitt, verwendeten Blattschutz festgelegt, wobei die erste und zweite Breite jeweils aus einem ersten Abstand der Drehachse zur ersten Blattschutzkante und einem zweiten Abstand der Drehachse zur zweiten Blattschutzkante zusammengesetzt sind. Wenn ein Endpunkt ein Hindernis darstellt, erfolgt die Positionssteuerung des Sägekopfes über die, dem Hindernis zugewandte, Blattschutzkante des verwendeten Blattschutzes. Bei einem asymmetrischen Blattschutz sind der erste und zweite Abstand der Drehachse zu den Blattschutzkanten verschieden, wohingegen bei einem symmetrischen Blattschutz der erste und zweite Abstand der Blattschutzkanten mit der halben Breite des Blattschutzes übereinstimmen.

Das erfindungsgemäße Steuerungsverfahren zeichnet sich dadurch aus, dass die zweite Begrenzung der Wandsäge nach der Schwenkbewegung des Sägearms in den negativen zweiten Hauptschnittwinkel mit dem zweiten Endpunkt zusammenfällt. Nach der Schwenkbewegung des Sägearms in den negativen zweiten Hauptschnittwinkel fällt der zweite obere Austrittspunkt des verwendeten Sägeblattes mit dem zweiten Endpunkt zusammen, wenn die Schwenkachse einen Abstand zum zweiten Endpunkt von √[h₂ · (D₂ - h₂)] + δ · sin(-α₂) aufweist, wobei h₂ = h(-α₂, D₂) = D₂/2 - Δ - δ · cos(-α₂) die Eindringtiefe des verwendeten Sägeblattes in das Werkstück beim negativen zweiten Hauptschnittwinkel mit dem zweiten Durchmesser bezeichnet, die zweite Sägeblattkante des verwendeten Sägeblattes mit dem zweiten Endpunkt zusammenfällt, wenn die Schwenkachse einen Abstand zum zweiten Endpunkt von D₂/2 + δ · sin(-α₂)aufweist, und die zweite Blattschutzkante des verwendeten Blattschutzes mit dem zweiten Endpunkt zusammenfällt, wenn die Schwenkachse einen Abstand zum zweiten Endpunkt von B_{2b} + δ · sin(-α₂)aufweist.

In einer ersten Ausführungsform stellt der zweite Hauptschnitt den letzten Hauptschnitt der Hauptschnittfolge dar und die Wandsäge wird nach dem zweiten Hauptschnitt in eine Endposition verfahren.

Der Sägekopf wird im zweiten Hauptschnitt so verfahren, dass eine, dem ersten Endpunkt zugewandte, erste Begrenzung der Wandsäge mit dem ersten Endpunkt zusammenfällt, wobei die erste Begrenzung der Wandsäge durch einen, dem ersten Endpunkt zugewandten, ersten oberen Austrittspunkt des verwendeten Sägeblattes an der Oberseite des Werkstückes gebildet wird, wenn der erste Endpunkt einen freien Endpunkt ohne Hindernis darstellt, durch eine, dem ersten Endpunkt zugewandte, erste Sägeblattkante des verwendeten Sägeblattes, wenn der erste Endpunkt ein Hindernis darstellt und die Bearbeitung ohne Blattschutz erfolgt, und durch eine, dem ersten Endpunkt zugewandte, erste Blattschutzkante des verwendeten Blattschutzes, wenn der erste Endpunkt ein Hindernis darstellt und die Bearbeitung mit Blattschutz erfolgt.

Der erste obere Austrittspunkt des verwendeten Sägeblattes fällt mit dem ersten Endpunkt zusammen, wenn die Schwenkachse einen Abstand zum ersten Endpunkt von √[h₂ · (D₂ - h₂)] - δ · sin(-α₂) aufweist, wobei h₂ = h(-α₂, D₂) = D₂/2 - Δ - δ · cos(-α₂) die Eindringtiefe des verwendeten Sägeblattes in das Werkstück beim negativen zweiten Hauptschnittwinkel mit dem zweiten Durchmesser bezeichnet, die erste Sägeblattkante des verwendeten Sägeblattes fällt mit dem ersten Endpunkt zusammen, wenn die Schwenkachse einen Abstand zum ersten Endpunkt von D₂/2 - δ · sin(-α₂) aufweist, und die erste Blattschutzkante des verwendeten Blattschutzes fällt mit dem ersten Endpunkt zusammen, wenn die Schwenkachse einen Abstand zum ersten Endpunkt von B₂ₐ - δ sin(-α₂) aufweist.

In einer zweiten Ausführungsform weist die Hauptschnittfolge einen, auf den zweiten Hauptschnitt folgenden, dritten Hauptschnitt mit einem dritten Hauptschnittwinkel des Sägearms, einem dritten Durchmesser des verwendeten Sägeblattes und einer dritten Breite des verwendeten Blattschutzes mit einem ersten und zweiten Abstand zu den Blattschutzkanten auf, wobei der Sägearm beim dritten Hauptschnitt in einer ziehenden Anordnung angeordnet wird und der Sägekopf in der positiven Vorschubrichtung verfahren wird.

Der Sägekopf wird beim zweiten Hauptschnitt mit dem, unter dem negativen zweiten Hauptschnittwinkel, geneigten Sägearm in der negativen Vorschubrichtung in Richtung des ersten Endpunktes verfahren. Dabei wird der Sägekopf bei der von der Kontrolleinheit gesteuerten Bearbeitung so verfahren, dass nach der Schwenkbewegung des Sägearms in den negativen dritten Hauptschnittwinkel die erste Begrenzung der Wandsäge mit dem ersten Endpunkt zusammenfällt, wobei die erste Begrenzung durch den ersten oberen Austrittspunkt des verwendeten Sägeblattes gebildet wird, wenn der erste Endpunkt einen freien Endpunkt ohne Hindernis darstellt, durch die erste Sägeblattkante des verwendeten Sägeblattes , wenn der erste Endpunkt ein Hindernis darstellt und die Bearbeitung ohne Blattschutz erfolgt, und durch die erste Blattschutzkante des verwendeten Blattschutzes, wenn der erste Endpunkt ein Hindernis darstellt und die Bearbeitung mit Blattschutz erfolgt.

Das erfindungsgemäße Verfahren zeichnet sich dadurch aus, dass auch die, dem ersten Endpunkt, zugewandte, erste Begrenzung der Wandsäge zur Steuerung genutzt wird. Nach der Schwenkbewegung des Sägearms in den dritten Hauptschnittwinkel fällt die erste Begrenzung mit dem ersten Endpunkt zusammenfällt. Besonders bevorzugt fällt der erste obere Austrittspunkt des verwendeten Sägeblattes mit dem ersten Endpunkt zusammen, wenn die Schwenkachse einen Abstand zum ersten Endpunkt von √[h₃ · (D₃ - h₃)] - δ sin(-α₃) aufweist, wobei h₃ = h(-α₃, D₃) = D₃/2 - Δ - δ · cos(-α₃) die Eindringtiefe des verwendeten Sägeblattes in das Werkstück beim negativen dritten Hauptschnittwinkel mit dem dritten Durchmesser bezeichnet, die erste Sägeblattkante des verwendeten Sägeblattes fällt mit dem ersten Endpunkt zusammen, wenn die Schwenkachse einen Abstand zum ersten Endpunkt von D₃/2 - δ sin(-α₃) aufweist, und die erste Blattschutzkante des verwendeten Blattschutzes fällt mit dem ersten Endpunkt zusammen, wenn die Schwenkachse einen Abstand zum ersten Endpunkt von B₃ₐ - δ · sin(-α₃) aufweist.

Der erste und zweite Hauptschnitt werden mit einem Sägeblatt und einem Blattschutz durchgeführt oder alternativ wird der erste Hauptschnitt von einem ersten Sägeblatt und einem ersten Blattschutz durchgeführt, wobei das erste Sägeblatt einen ersten Sägeblattdurchmesser und der erste Blattschutz eine erste Blattschutzbreite aufweisen, und der zweite Hauptschnitt wird von einem zweiten Sägeblatt und einem zweiten Blattschutz durchgeführt, wobei das zweite Sägeblatt einen zweiten Sägeblattdurchmesser und der zweite Blattschutz eine zweite Blattschutzbreite aufweisen. Die Anzahl der Hauptschnitte und die dabei verwendeten Sägeblattdurchmesser hängen unter anderem von der Spezifikation des Sägeblattes, der Härte des Werkstoffes, der Leistung und dem Drehmoment des Antriebsmotors für das Sägeblatt sowie von der Endtiefe des Trennschnittes ab.

In einer bevorzugten Ausführungsform stellt der erste Hauptschnitt der Hauptschnittfolge einen Vorschnitt dar und der Sägekopf wird nach dem Start der von der Kontrolleinheit gesteuerten Bearbeitung parallel zur Vorschubrichtung in eine Startposition positioniert, wobei in der Startposition die, dem ersten Endpunkt zugewandte erste Begrenzung der Wandsäge nach der Schwenkbewegung in den negativen ersten Hauptschnittwinkel mit dem ersten Endpunkt zusammenfällt, wobei die erste Begrenzung durch den ersten oberen Austrittspunkt des verwendeten Sägeblattes gebildet wird, wenn der erste Endpunkt einen freien Endpunkt ohne Hindernis darstellt, durch die erste Sägeblattkante des verwendeten Sägeblattes, wenn der erste Endpunkt ein Hindernis darstellt und die Bearbeitung ohne Blattschutz erfolgt, und durch die erste Blattschutzkante des verwendeten Blattschutzes, wenn der erste Endpunkt ein Hindernis darstellt und die Bearbeitung mit Blattschutz erfolgt.

Besonders bevorzugt fällt in der Startposition der erste obere Austrittspunkt des verwendeten Sägeblattes mit dem ersten Endpunkt zusammen, wenn die Schwenkachse einen Abstand zum ersten Endpunkt von √[h₁ · (D₁ - h₁)] - δ sin(-α₁) aufweist, wobei h₁ = h(-α₁, D₁) = D₁/2 - Δ - δ · cos(-α₁) die Eindringtiefe des verwendeten Sägeblattes in das Werkstück beim negativen ersten Hauptschnittwinkel mit dem ersten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₁/2 - δ · sin(-α₁) aufweist, und die erste Blattschutzkante des verwendeten Blattschutzes mit dem ersten Endpunkt zusammenfällt, wenn die Schwenkachse einen Abstand zum ersten Endpunkt von B₁ₐ - δ · sin(-α₁) aufweist.

In einer alternativen bevorzugten Ausführungsform umfasst die Hauptschnittfolge einen, vor dem ersten Hauptschnitt durchzuführenden Vorschnitt mit einem nullten Hauptschnittwinkel des Sägearms, einem nullten Durchmesser des verwendeten Sägeblattes und einer nullten Breite des verwendeten Blattschutzes mit einem ersten und zweiten Abstand zu den Blattschutzkanten, wobei der Sägearm beim Vorschnitt in einer ziehenden Anordnung angeordnet wird und der Sägekopf in der negativen Vorschubrichtung verfahren wird.

Der Sägekopf wird nach dem Start der von der Kontrolleinheit gesteuerten Bearbeitung parallel zur Vorschubrichtung für den Vorschnitt in eine Startposition positioniert, wobei in der Startposition die, dem zweiten Endpunkt zugewandte, zweite Begrenzung der Wandsäge nach der Schwenkbewegung in den positiven nullten Hauptschnittwinkel mit dem zweiten Endpunkt zusammenfällt. Besonders bevorzugt fällt nach der Schwenkbewegung des Sägearms in den positiven nullten Hauptschnittwinkel der zweite obere Austrittspunkt des verwendeten Sägeblattes mit dem zweiten Endpunkt zusammen, wenn die Schwenkachse einen Abstand zum zweiten Endpunkt (E₂) von √[h₀ · (D₀ - h₀)] + δ · sin(+α₀) aufweist, wobei h₀ = h(+α₀, D₀) = D₀/2 - Δ - δ · cos(+α₀) die Eindringtiefe des verwendeten Sägeblattes in das Werkstück beim positiven nullten Hauptschnittwinkel mit dem nullten Durchmesser bezeichnet, die zweite Sägeblattkante des verwendeten Sägeblattes fällt mit dem zweiten Endpunkt zusammen, wenn die Schwenkachse einen Abstand zum zweiten Endpunkt von D₀/2 + δ · sin(+α₀) aufweist, und die zweite Blattschutzkante des verwendeten Blattschutzes fällt mit dem zweiten Endpunkt zusammen, wenn die Schwenkachse einen Abstand zum zweiten Endpunkt (E₂) von B_{0b} + δ · sin(+α₀) aufweist.

Der Wechsel vom Vorschnitt (nullter Hauptschnitt) zum ersten Hauptschnitt kann auf verschiedene Arten durchgeführt werden. Die Varianten unterscheiden sich dadurch, wie das Restmaterial des Vorschnittes abgetragen wird. In einer ersten Variante wird der Vorschnitt bis zum ersten Endpunkt durchgezogen und das Material im Vorschnitt vollständig abgetragen. Bei einer zweiten Variante wird der Sägearm vor Erreichen des ersten Endpunktes in den negativen ersten Hauptschnittwinkel umgeschwenkt und das Restmaterial vollständig oder zumindest teilweise abgetragen. Eine dritte Variante verzichtet auf das Abtragen und schwenkt den Sägearm direkt aus dem positiven nullten Schwenkwinkel in den negativen ersten Hauptschnittwinkel.

In der ersten Variante wird der Sägekopf bei der gesteuerten Bearbeitung in der positiven Vorschubrichtung angehalten, wenn die erste Begrenzung der Wandsäge mit dem ersten Endpunkt zusammenfällt, wobei die erste Begrenzung der Wandsäge durch den ersten oberen Austrittspunkt des verwendeten Sägeblattes an der Oberseite des Werkstückes gebildet wird, wenn der erste Endpunkt einen freien Endpunkt ohne Hindernis darstellt, durch die erste Sägeblattkante des verwendeten Sägeblattes, wenn der erste Endpunkt ein Hindernis darstellt und die Bearbeitung ohne Blattschutz erfolgt, und durch die erste Blattschutzkante des verwendeten Blattschutzes, wenn der erste Endpunkt ein Hindernis darstellt und die Bearbeitung mit Blattschutz erfolgt. Die erste Variante eignet sich bei einem freien Endpunkt vor allem für große Sägeblattdurchmesser und lange Führungsschienen; bei kleinen Sägeblattdurchmessern und kurzen Führungsschienen kann das Ende der Führungsschiene erreicht sein, bevor der erste obere Austrittspunkt mit dem ersten Endpunkt zusammenfällt.

Anschließend wird der Sägekopf in der positiven Vorschubrichtung so positioniert, dass die erste Begrenzung der Wandsäge nach der Schwenkbewegung des Sägearms in den negativen ersten Hauptschnittwinkel mit dem ersten Endpunkt zusammenfällt, wobei der erste obere Austrittspunkt mit dem ersten Endpunkt zusammenfällt, wenn die Schwenkachse einen Abstand zum ersten Endpunkt von √[h₁ · (D₁ - h₁)] + δ · sin(-α₁) aufweist, wobei h₁ = h(-α₁, D₁) = D₁/2 - Δ - δ · cos(-α₁) die Eindringtiefe des verwendeten Sägeblattes in das Werkstück beim negativen ersten Hauptschnittwinkel mit dem ersten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₁/2 + δ · sin(-α₁) aufweist, und die erste Blattschutzkante des verwendeten Blattschutzes mit dem ersten Endpunkt zusammenfällt, wenn die Schwenkachse einen Abstand zum ersten Endpunkt von B₁ₐ + δ · sin(-α₁) aufweist.

In der zweiten Variante wird der Sägekopf beim Vorschnitt in der negativen Vorschubrichtung so verfahren, dass nach der Schwenkbewegung des Sägearms in den negativen nullten Hauptschnittwinkel die erste Begrenzung der Wandsäge mit dem ersten Endpunkt zusammenfällt, wobei der erste obere Austrittspunkt des verwendeten Sägeblattes mit dem ersten Endpunkt zusammenfällt, wenn die Schwenkachse einen Abstand zum ersten Endpunkt von √[h₀ · (D₀ - h₀)] - δ · sin(-α₀) aufweist, wobei h₀ = h(-α₀, D₀) = D₀/2 - Δ - δ · cos(-α₀) die Eindringtiefe des verwendeten Sägeblattes in das Werkstück beim negativen nullten Hauptschnittwinkel mit dem nullten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₀/2 - δ · sin(-α₀) aufweist, und die erste Blattschutzkante des verwendeten Blattschutzes mit dem ersten Endpunkt zusammenfällt, wenn die Schwenkachse einen Abstand zum ersten Endpunkt von B₀ₐ - δ · sin(-α₀) aufweist.

Bei der zweiten Variante erfolgt die Bearbeitung des Vorschnittes ausschließend ziehend und der Sägearm wird vor Erreichen des ersten Endpunktes in den negativen ersten Hauptschnittwinkel umgeschwenkt. Die zweite Variante wird bei einem freien Endpunkt vor allem für kleine Sägeblattdurchmesser und kurze Führungsschienen angewendet, da die erste Variante für diese Konstellation an Sägeblattdurchmesser und Schienenlänge nur eingeschränkt nutzbar ist. Das Umschwenken des Sägearms erhöht die Nebenzeit für den trennschnitt.

Der Sägekopf wird nach dem Umschwenken in der positiven Vorschubrichtung um eine Weglänge von mindestens 2δ |sin(-α₀)| verfahren und der Sägekopf anschließend so positioniert, dass die erste Begrenzung der Wandsäge nach der Schwenkbewegung des Sägearms in den negativen ersten Hauptschnittwinkel mit dem ersten Endpunkt zusammenfällt, wobei der erste obere Austrittspunkt des verwendeten Sägeblattes mit dem ersten Endpunkt zusammenfällt, wenn die Schwenkachse einen Abstand zum ersten Endpunkt von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück beim negativen ersten Hauptschnittwinkel mit dem ersten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₁/2 - δ · sin(-α₁) aufweist, und die erste Blattschutzkante des verwendeten Blattschutzes mit dem ersten Endpunkt zusammenfällt, wenn die Schwenkachse einen Abstand zum ersten Endpunkt von B₁ₐ - δ · sin(-α₁) aufweist.

Alternativ zum Abtragen und Positionieren wird der Sägekopf in der positiven Vorschubrichtung so verfahren, dass die erste Begrenzung der Wandsäge nach der Schwenkbewegung des Sägearms in den negativen ersten Hauptschnittwinkel mit dem ersten Endpunkt zusammenfällt, wobei der erste obere Austrittspunkt des verwendeten Sägeblattes mit dem ersten Endpunkt zusammenfällt, wenn die Schwenkachse einen Abstand zum ersten Endpunkt von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück beim negativen ersten Hauptschnittwinkel mit dem ersten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₁/2 - δ · sin(-α₁) aufweist, und die erste Blattschutzkante des verwendeten Blattschutzes mit dem ersten Endpunkt zusammenfällt, wenn die Schwenkachse einen Abstand zum ersten Endpunkt von B₁ₐ - δ · sin(-α₁) aufweist.

In der dritten Variante wird der Sägekopf in der positiven Vorschubrichtung so verfahren, dass die erste Begrenzung der Wandsäge nach der Schwenkbewegung des Sägearms in den negativen ersten Hauptschnittwinkel mit dem ersten Endpunkt zusammenfällt, wobei der erste obere Austrittspunkt mit dem ersten Endpunkt zusammenfällt, wenn die Schwenkachse einen Abstand zum ersten Endpunkt von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück beim negativen ersten Hauptschnittwinkel mit dem ersten Durchmesser bezeichnet, die erste Sägeblattkante des verwendeten Sägeblattes mit dem ersten Endpunkt zusammenfällt, wenn die Schwenkachse einen Abstand zum ersten Endpunkt von D₁/2 - δ · sin(-α₁) aufweist, und die erste Blattschutzkante des verwendeten Blattschutzes mit dem ersten Endpunkt zusammenfällt, wenn die Schwenkachse einen Abstand zum ersten Endpunkt von B₁ₐ - δ · sin(-α₁) aufweist.

Die dritte Variante verzichtet völlig auf ein Entfernen des Restmaterials im Vorschnitt. Der Abstand wird so eingestellt, dass die erste Begrenzung der Wandsäge nach der Schwenkbewegung des Sägearms in den negativen ersten Hauptschnittwinkel mit dem ersten Endpunkt zusammenfällt. Die Variante ohne Entfernen des Restmaterials weist die niedrigsten Nebenzeiten auf; allerdings ist ein leistungsstarker Antriebsmotor erforderlich, der die größere Schnitttiefe am Endpunkt bearbeiten kann.

Das erfindungsgemäße Verfahren gilt für alle Hauptschnitte, bei denen der Hauptschnittwinkel kleiner oder gleich einem kritischen Schwenkwinkel ist. Der kritische Schwenkwinkel entspricht ±90°, wenn der Endpunkt ein Hindernis darstellt, und der kritische Schwenkwinkel entspricht 180° - arccos[Δ/(δ + D/2)], wenn der Endpunkt einen freien Endpunkt ohne Hindernis darstellt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Wandsägesystem mit einer Führungsschiene und einer Wandsäge;
- FIGN. 2A, B: die Bearbeitung eines Trennschnittes zwischen einem ersten und zweiten freien Endpunkt ohne Hindernis;
- FIGN. 3A, B: die Bearbeitung eines Trennschnittes zwischen einem ersten und zweiten Hindernis mit einem Sägeblatt, das nicht von einem Blattschutz umgeben ist;
- FIGN. 4A, B: die Bearbeitung eines Trennschnittes zwischen einem ersten und zweiten Hindernis mit einem Sägeblatt, das von einem Blattschutz umgeben ist;
- FIGN. 5A-K: das Wandsägesystem der FIG. 1 bei Erstellen eines Trennschnittes zwischen einem ersten Hindernis und einem zweiten freien Endpunkt ohne Hindernis.

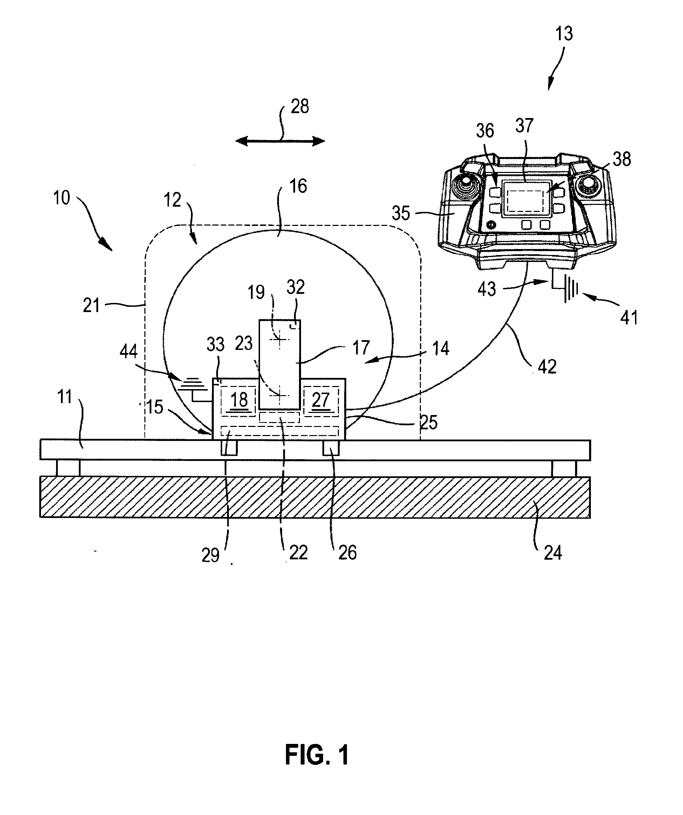

**FIG. 1** zeigt ein Wandsägesystem **10** mit einer Führungsschiene **11,** einem, an der Führungsschiene 11 verschiebbar angeordneten, Werkzeuggerät **12** und einer Fernbedienung **13.** Das Werkzeuggerät ist als Wandsäge 12 ausgebildet und umfasst eine Bearbeitungseinheit **14** und eine motorische Vorschubeinheit **15.** Die Bearbeitungseinheit ist als Sägekopf 14 ausgebildet und umfasst ein als Sägeblatt ausgebildetes Bearbeitungswerkzeug **16,** das an einem Sägearm **17** befestigt ist und von einem Antriebsmotor **18** um eine Drehachse **19** angetrieben wird.

Zum Schutz des Bedieners ist das Sägeblatt 16 von einem Blattschutz **21** umgeben, der mittels eines Blattschutzhalters am Sägearm 17 befestigt wird. Der Sägearm 17 ist von einem Schwenkmotor **22** um eine Schwenkachse **23** schwenkbar ausgebildet. Der Schwenkwinkel α des Sägearms 17 bestimmt mit einem Sägeblattdurchmesser **D** des Sägeblattes 16, wie tief das Sägeblatt 16 in ein zu bearbeitendes Werkstück **24** eintaucht. Der Antriebsmotor 18 und der Schwenkmotor 22 sind in einem Gerätegehäuse **25** angeordnet. Die motorische Vorschubeinheit 15 umfasst einen Führungsschlitten **26** und einen Vorschubmotor **27,** der im Ausführungsbeispiel ebenfalls im Gerätegehäuse 25 angeordnet ist. Der Sägekopf 14 ist auf dem Führungsschlitten 26 befestigt und über den Vorschubmotor 27 entlang der Führungsschiene 11 in einer Vorschubrichtung **28** verschiebbar ausgebildet. Im Gerätegehäuse 25 ist neben den Motoren 19, 22, 27 eine Kontrolleinheit **29** zur Steuerung des Sägekopfes 14 und der motorischen Vorschubeinheit 15 angeordnet.

Zur Überwachung des Wandsägesystems 10 und des Bearbeitungsprozesses ist eine Sensoreinrichtung mit mehreren Sensorelementen vorgesehen. Ein erstes Sensorelement 32 ist als Schwenkwinkelsensor und ein zweites Sensorelement **33** als Wegsensor ausgebildet. Der Schwenkwinkelsensor 32 misst den aktuellen Schwenkwinkel des Sägearms 17 und der Wegsensor 33 misst die aktuelle Position des Sägekopfes 14 auf der Führungsschiene 11. Die Messgrößen werden vom Schwenkwinkelsensor 32 und Wegsensor 33 an die Kontrolleinheit 29 übermittelt und zur Steuerung der Wandsäge 12 herangezogen.

Die Fernbedienung 13 umfasst ein Gerätegehäuse **35,** eine Eingabeeinrichtung **36,** eine Anzeigeeinrichtung **37** und eine Kontrolleinheit **38,** die im Inneren des Gerätegehäuses 35 angeordnet ist. Die Kontrolleinheit 38 wandelt die Eingaben der Eingabeeinrichtung 36 in Steuerbefehle und Daten um, die über eine erste Kommunikationsverbindung an die Wandsäge 12 übermittelt werden. Die erste Kommunikationsverbindung ist als draht- und kabellose Kommunikationsverbindung **41** oder als Kommunikationskabel **42** ausgebildet. Die draht- und kabellose Kommunikationsverbindung ist im Ausführungsbeispiel als Funkverbindung 41 ausgebildet, die zwischen einer ersten Funkeinheit **43** an der Fernbedienung 13 und einer zweiten Funkeinheit **44** am Werkzeuggerät 12 entsteht. Alternativ kann die draht- und kabellose Kommunikationsverbindung 41 in Form einer Infrarot-, Bluetooth-, WLAN- oder Wi-Fi-Verbindung ausgebildet sein.

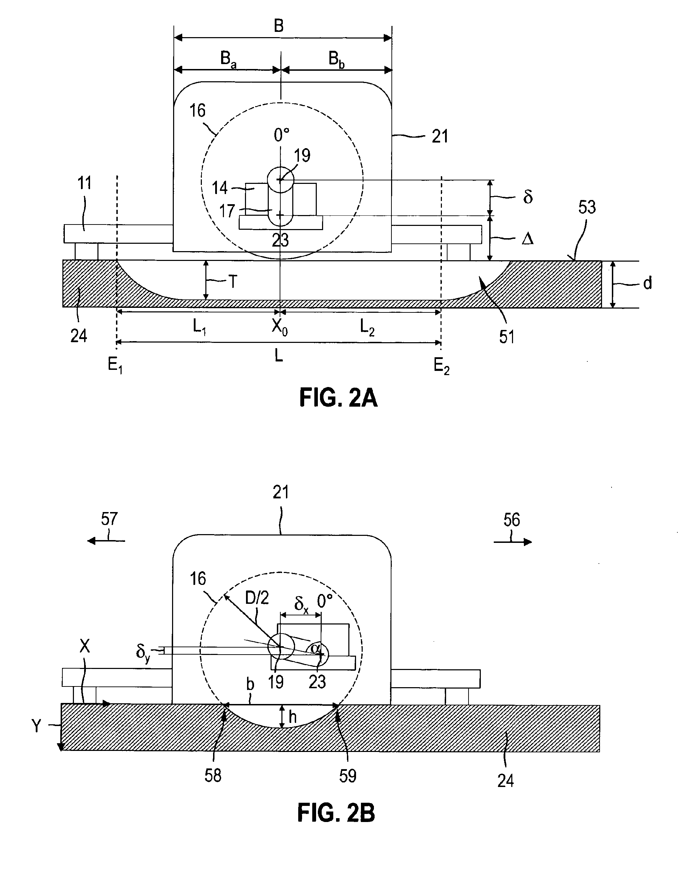

**FIGN. 2A****, B** zeigen die Führungsschiene 11 und die Wandsäge 12 des Wandsägesystems 10 der FIG. 1 beim Erstellen eines Trennschnittes **51** im Werkstück 24 der Werkstückdicke **d.** Der Trennschnitt 51 weist eine Endtiefe **T** auf und verläuft in Vorschubrichtung 28 zwischen einem ersten Endpunkt **E₁** und einem zweiten Endpunkt **E₂.** Als **X**-Richtung ist eine Richtung parallel zur Vorschubrichtung 28 definiert, wobei die positive X-Richtung vom ersten Endpunkt E₁ zum zweiten Endpunkt E₂ gerichtet ist, und als **Y**-Richtung ist eine Richtung senkrecht zur X-Richtung in die Tiefe des Werkstückes 24 definiert.

Der Endpunkt eines Trennschnittes kann als freier Endpunkt ohne Hindernis oder als Hindernis definiert sein. Dabei können beide Endpunkte als freie Endpunkte ohne Hindernis, beide Endpunkte als Hindernis oder ein Endpunkt als freier Endpunkt und der andere Endpunkt als Hindernis definiert sein. An einem freien Endpunkt ohne Hindernis kann ein Überschneiden erlaubt sein. Durch das Überschneiden erreicht die Schnitttiefe am Endpunkt die Endtiefe T des Trennschnittes. Im Ausführungsbeispiel der FIGN. 2A, B bilden die Endpunkte E₁, E₂ freie Endpunkte ohne Hindernis, wobei am freien ersten Endpunkt E₁ ein Überschneiden nicht zulässig ist und am zweiten Endpunkt E₂ ein Überschneiden erfolgt ist.

FIG. 2A zeigt den Sägekopf 14 in einer Montageposition **X₀** und den Sägearm 17 in einer Grundposition von 0°. Der Sägekopf 14 wird vom Bediener mittels des Führungsschlittens 26 in der Montageposition X₀ auf der Führungsschiene 11 positioniert. Die Montageposition X₀ des Sägekopfes 14 liegt zwischen dem ersten und zweiten Endpunkt E₁, E₂ und ist durch die Position der Schwenkachse 23 in Vorschubrichtung 28 bestimmt. Die Position der Schwenkachse 23 eignet sich besonders als Referenzposition **X_{Ref}** für die Positionsüberwachung des Sägekopfes 14 und die Steuerung der Wandsäge 12, da die X-Position der Schwenkachse 23 auch während der Schwenkbewegung des Sägearms 17 unverändert bleibt. Alternativ kann eine andere X-Position am Sägekopf 14 als Referenzposition festgelegt werden, wobei in diesem Fall zusätzlich der Abstand in X-Richtung zur Schwenkachse 23 bekannt sein muss.

Die X-Positionen des ersten und zweiten Endpunktes E₁, E₂ sind im Ausführungsbeispiel durch die Eingabe von Teillängen festgelegt. Der Abstand zwischen der Montageposition X₀ und dem ersten Endpunkt E₁ bestimmt eine erste Teillänge **L₁** und der Abstand zwischen der Montageposition X₀ und dem zweiten Endpunkt E₂ eine zweite Teillänge L₂. Alternativ können die X-Positionen der Endpunkte E₁, E₂ durch die Eingabe einer Teillänge (L₁ oder L₂) und einer Gesamtlänge **L** als Abstand zwischen den Endpunkten E₁, E₂ festgelegt werden.

Der Trennschnitt 51 wird in mehreren Teilschnitten erstellt, bis die gewünschte Endtiefe T erreicht ist. Die Teilschnitte zwischen dem ersten und zweiten Endpunkt E₁, E₂ werden als Hauptschnitte definiert und die Schnittfolge der Hauptschnitte als Hauptschnittfolge. An den Endpunkten des Trennschnittes kann eine zusätzliche Eckenbearbeitung durchgeführt werden, die bei einem Hindernis als Hindernisbearbeitung und bei einem freien Endpunkt mit Überschneiden als Überschnittbearbeitung bezeichnet wird.

Die Hauptschnittfolge kann vom Bediener festgelegt werden oder die Kontrolleinheit des Wandsägesystems legt die Hauptschnittfolge abhängig von mehreren Randbedingungen fest. Üblicherweise wird der erste Hauptschnitt, der auch als Vorschnitt bezeichnet wird, mit einer reduzierten Schnitttiefe und einer reduzierten Leistung des Antriebsmotors ausgeführt, um ein Polieren des Sägeblattes zu verhindern. Die weiteren Hauptschnitte werden in der Regel mit der gleichen Schnitttiefe ausgeführt, können aber auch unterschiedliche Schnitttiefen aufweisen. Zu den Randbedingungen, die von einem Bediener üblicherweise festgelegt werden, gehören die Schnitttiefe des Vorschnittes, die Leistung des Vorschnittes und die maximale Schnitttiefe der weiteren Hauptschnitte. Aus diesen Randbedingungen kann die Kontrolleinheit die Hauptschnittfolge bestimmen.

Die Hauptschnitte eines Trennschnittes werden mit einem Sägeblattdurchmesser oder mit zwei oder mehr Sägeblattdurchmessern durchgeführt. Wenn mehrere Sägeblätter eingesetzt werden, beginnt die Bearbeitung in der Regel mit dem kleinsten Sägeblattdurchmesser. Um das Sägeblatt 16 am Sägearm 17 montieren zu können, muss das Sägeblatt 16 in der Grundposition des Sägearms 17 oberhalb des Werkstückes 24 angeordnet sein. Ob diese Randbedingung erfüllt ist, hängt von zwei gerätespezifischen Größen des Wandsägesystems 10 ab, zum einen von einem senkrechten Abstand Δ zwischen der Schwenkachse 23 des Sägearms 17 und einer Oberseite 53 des Werkstückes 24 und zum anderen von einer Sägearmlänge δ des Sägearms 17, die als Abstand zwischen der Drehachse 19 des Sägeblattes 16 und der Schwenkachse 23 des Sägearms 17 definiert ist. Wenn die Summe dieser beiden gerätespezifischen Größen grösser als der halbe Sägeblattdurchmesser D/2 ist, ist das Sägeblatt 16 in der Grundposition oberhalb des Werkstückes 24 angeordnet. Die Sägearmlänge δ ist eine feste gerätespezifische Größe der Wandsäge 12, wohingegen der senkrechte Abstand Δ zwischen der Schwenkachse 23 und der Oberfläche 53 neben der Geometrie der Wandsäge 12 auch von der Geometrie der verwendeten Führungsschiene 11 abhängt.

Das Sägeblatt 16 ist auf einem Flansch am Sägearm 17 befestigt und wird im Sägebetrieb vom Antriebsmotor 18 um die Drehachse 19 angetrieben. In der Grundposition des Sägearms 17, die in FIG. 2A dargestellt ist, beträgt der Schwenkwinkel 0° und die Drehachse 19 des Sägeblattes 16 liegt in Tiefenrichtung 52 oberhalb der Schwenkachse 23. Das Sägeblatt 16 wird durch eine Schwenkbewegung des Sägearms 17 um die Schwenkachse 23 aus der Grundposition bei 0° in das Werkstück 24 hineinbewegt. Während der Schwenkbewegung des Sägearms 17 wird das Sägeblatt 16 vom Antriebsmotor 18 um die Drehachse 19 angetrieben.

Zum Schutz des Bedieners soll das Sägeblatt 16 während des Betriebes vom Blattschutz 21 umgeben sein. Die Wandsäge 12 wird mit Blattschutz 21 oder ohne Blattschutz 21 betrieben. Zur Bearbeitung des Trennschnittes im Bereich der Endpunkte E₁, E₂ kann beispielsweise eine Demontage des Blattschutzes 21 vorgesehen sein. Wenn zur Bearbeitung des Trennschnittes verschiedene Sägeblattdurchmesser eingesetzt werden, werden in der Regel auch verschiedene Blattschutze mit entsprechenden Blattschutzbreiten eingesetzt.

FIG. 2B zeigt den Sägearm 17, der in einer negativen Drehrichtung **54** unter einem negativen Schwenkwinkel -α geneigt ist. Der Sägearm 17 ist in der negativen Drehrichtung 54 zwischen Schwenkwinkeln von 0° bis -180° verstellbar und in einer, zur negativen Drehrichtung 54 entgegen gerichteten, positiven Drehrichtung **55** zwischen Schwenkwinkeln von 0° bis +180° verstellbar. Die in FIG. 2B dargestellte Anordnung des Sägearms 17 wird als ziehende Anordnung bezeichnet, wenn der Sägekopf 14 in eine positive Vorschubrichtung **56** bewegt wird. Wird der Sägekopf 14 in eine, zur positiven Vorschubrichtung 56 entgegen gerichtete, negative Vorschubrichtung **57** bewegt, wird die Anordnung des Sägearms 17 als stoßende Anordnung bezeichnet.

Bei einem Schwenkwinkel von ±180° wird die maximale Eindringtiefe des Sägeblattes 16 in das Werkstück 24 erreicht. Durch die Schwenkbewegung des Sägearms 17 um die Schwenkachse 23 wird die Position der Drehachse 19 in X-Richtung und in Y-Richtung verschoben. Dabei ist die Verschiebung der Drehachse 19 von der Sägearmlänge δ und dem Schwenkwinkel α des Sägearms 17 abhängig. Der Verschiebeweg δ**ₓ** in X-Richtung beträgt δ sin(±α) und der Verschiebeweg δ**_{y}** in Y-Richtung beträgt δ · cos(±α).

Das Sägeblatt 16 erzeugt im Werkstück 24 einen Schneidkeil in Form eines Kreissegmentes mit einer Höhe **h** und einer Breite **b**. Die Höhe h des Kreissegmentes entspricht der Eindringtiefe des Sägeblattes 16 in das Werkstück 24. Für die Eindringtiefe h gilt der Zusammenhang D/2 = h + Δ + δ · cos(α), wobei D den Sägeblattdurchmesser, h die Eindringtiefe des Sägeblattes 16, Δ den senkrechten Abstand zwischen der Schwenkachse 23 und der Oberseite 53 des Werkstückes 24, δ die Sägearmlänge und α den ersten Schwenkwinkel bezeichnen, und für die Breite b gilt der Zusammenhang b² = D/2 · 8h - 4h² = 4Dh - 4h² = 4h · (D - h), wobei h die Eindringtiefe des Sägeblattes 16 in das Werkstück 24 und D den Sägeblattdurchmesser bezeichnen.

Die Steuerung der Wandsäge 12 während des Trennschnittes ist davon abhängig, ob die Endpunkte als Hindernisse definiert sind, und bei einem Hindernis, ob die Bearbeitung mit Blattschutz 21 oder ohne Blattschutz 21 erfolgt. Bei einem freien Endpunkt ohne Hindernis erfolgt die Steuerung der Wandsäge 12 beim erfindungsgemäßen Verfahren über obere Austrittspunkte des Sägeblattes 16 an der Oberseite 53 des Werkstückes 24. Die oberen Austrittspunkte des Sägeblattes 16 lassen sich aus der Referenzposition X_{Ref} der Schwenkachse 23 in X-Richtung, dem Verschiebeweg δₓ der Drehachse 19 in X-Richtung und der Breite b berechnen. Ein, dem ersten Endpunkt E₁ zugewandter, oberer Austrittspunkt wird als erster oberer Austrittspunkt **58** bezeichnet und ein, dem zweiten Endpunkt E₂ zugewandter, oberer Austrittspunkt als zweiter oberer Austrittspunkt **59.** Für den ersten oberen Austrittspunkt 58 gilt X(58) = X_{Ref} + δₓ - b/2 und für den zweiten oberen Austrittspunkt 59 gilt X(59) = X_{Ref} + δₓ + b/2 mit b = √[h · (D - h)] und h = h(α, D).

Wenn die Endpunkte E₁, E₂ als Hindernisse definiert sind, ist ein Überfahren der Endpunkte E₁, E₂ mit der Wandsäge 12 nicht möglich. In diesem Fall erfolgt die Steuerung der Wandsäge 12 beim erfindungsgemäßen Verfahren über die Referenzposition X_{Ref} der Schwenkachse 23 und die Begrenzung der Wandsäge 12. Dabei wird zwischen einer Bearbeitung ohne Blattschutz 21 und einer Bearbeitung mit Blattschutz 21 unterschieden.

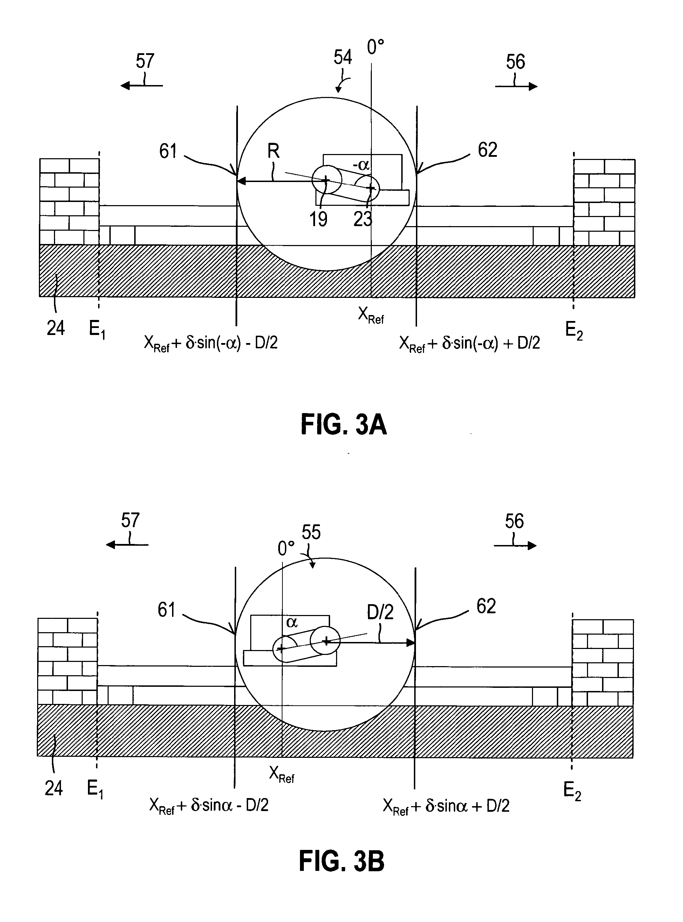

**FIGN. 3A****, B** zeigen das Wandsägesystem 10 beim Erstellen eines Trennschnittes zwischen dem ersten Endpunkt E₁ und dem zweiten Endpunkt E₂, die als Hindernisse definiert sind, wobei die Bearbeitung ohne Blattschutz 21 erfolgt. Bei der Bearbeitung ohne Blattschutz 21 bilden eine erste Sägeblattkante **61,** die dem ersten Endpunkt E₁ zugewandt ist, und eine zweite Sägeblattkante **62,** die dem zweiten Endpunkt E₂ zugewandt ist, die Begrenzung der Wandsäge 12.

Die X-Positionen der ersten und zweiten Sägeblattkante 61, 62 in X-Richtung lassen sich aus der Referenzposition X_{Ref} der Schwenkachse 23, dem Verschiebeweg δₓ der Drehachse 19 und dem Sägeblattdurchmesser D berechnen. FIG. 3A zeigt die Wandsäge 12 mit dem, in der negativen Drehrichtung 54 unter einem negativen Schwenkwinkel -α (0° bis -180°) geneigten Sägearm 17. Für die erste Sägeblattkante 61 gilt X(61) = X_{Ref} + δ · sin(-α) - D/2 und für die zweite Sägeblattkante 62 gilt X(62) = X_{Ref} + δ · sin(-α) + D/2. FIG. 3B zeigt die Wandsäge 12 mit dem, in der positiven Drehrichtung 55 unter einem positiven Schwenkwinkel α (0° bis +180°), geneigten Sägearm 17. Für die erste Sägeblattkante 61 gilt X(61) = X_{Ref} + δ · sin(α) - D/2 und für die zweite Sägeblattkante 62 gilt X(62) = X_{Ref} + δ · sin(α) + D/2.

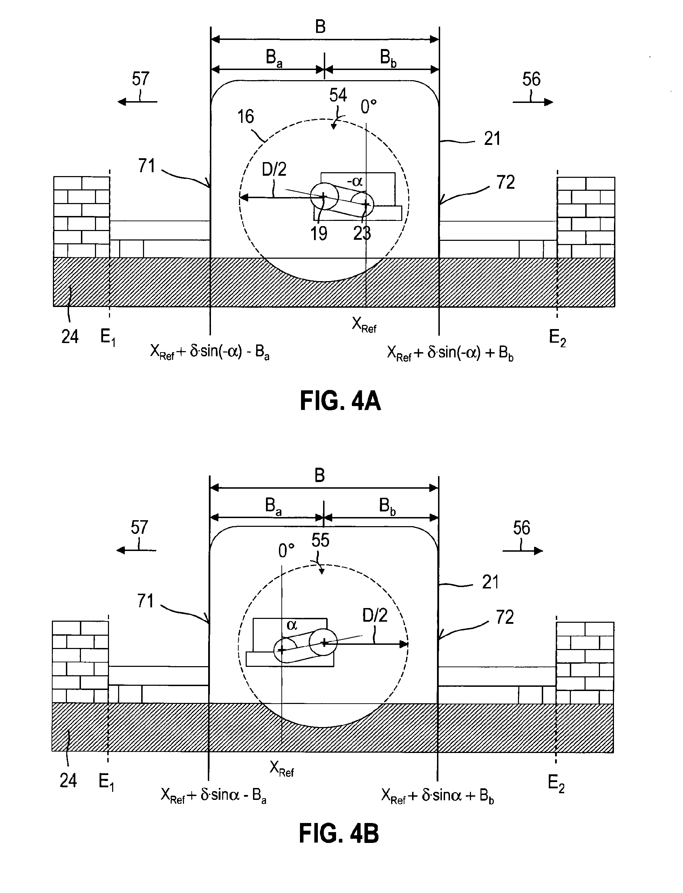

**FIGN. 4A****, B** zeigen das Wandsägesystem 10 beim Erstellen eines Trennschnittes zwischen dem ersten Endpunkt E₁ und dem zweiten Endpunkt E₂, die als Hindernisse definiert sind, wobei die Bearbeitung mit Blattschutz 21 erfolgt. Bei der Bearbeitung ohne Blattschutz 21 bilden eine erste Blattschutzkante **71,** die dem ersten Endpunkt E₁ zugewandt ist, und eine zweite Blattschutzkante **72,** die dem zweiten Endpunkt E₂ zugewandt ist, die Begrenzung der Wandsäge 12.

Die X-Positionen der ersten und zweiten Blattschutzkante 71, 72 in X-Richtung lassen sich aus der Referenzposition X_{Ref} der Schwenkachse 23, dem Verschiebeweg δₓ der Drehachse 19 und der Blattschutzbreite B berechnen. FIG. 4A zeigt die Wandsäge 12 mit dem, unter einem negativen Schwenkwinkel -α (0° bis -180°), geneigten Sägearm 17 und dem montierten Blattschutz 21 der Blattschutzbreite B. Bei einem asymmetrischen Blattschutz werden vor dem Start der gesteuerten Bearbeitung die Abstände der Drehachse 19 zu den Blattschutzkanten 71, 72 bestimmt, wobei der Abstand zur ersten Blattschutzkante 71 als erster Abstand **Bₐ** und der Abstand zur zweiten Blattschutzkante 72 als zweiter Abstand **B_{b}** bezeichnet werden.

Für die erste Blattschutzkante 71 gilt X(71) = X_{Ref} + δ · sin(α) - Bₐ und für die zweite Blattschutzkante 72 gilt X(72) = X_{Ref} + δ · sin(α) + B_{b}. FIG. 4B zeigt die Wandsäge 12 mit dem, unter einem positiven Schwenkwinkel α (0° bis +180°), geneigten Sägearm 17 und dem montierten Blattschutz 21 der Blattschutzbreite B. Für die erste Blattschutzkante 71 gilt X(71) = X_{Ref} + δ · sin(a) - Bₐ und für die zweite Blattschutzkante 72 gilt X(72) = X_{Ref} + δ · sin(α) + B_{b}.

FIGN. 2A, B zeigen einen Trennschnitt zwischen zwei Endpunkten E₁, E₂, die als freie Endpunkte ohne Hindernis definiert sind, und FIGN. 3A, B und 4A, B zeigen einen Trennschnitt zwischen zwei Endpunkten E₁, E₂, die als Hindernisse definiert sind. In der Praxis sind auch Trennschnitte möglich, bei denen ein Endpunkte als Hindernis definiert ist und der andere Endpunkt einen freien Endpunkt ohne Hindernis darstellt, wobei die Steuerung der Wandsäge beim freien Endpunkt über den oberen Austrittspunkt des Sägeblattes erfolgt und beim Hindernis über die Sägeblattkante (Bearbeitung ohne Blattschutz 21) oder die Blattschutzkante (Bearbeitung mit Blattschutz 21).

Der erste obere Austrittspunkt 58, die erste Sägeblattkante 61 und die erste Blattschutzkante 71 werden unter dem Begriff "erste Begrenzung" der Wandsäge 12 zusammen gefasst und der zweite obere Austrittspunkt 59, die zweite Sägeblattkante 62 und die zweite Blattschutzkante 72 werden unter dem Begriff "zweite Begrenzung" zusammen gefasst.

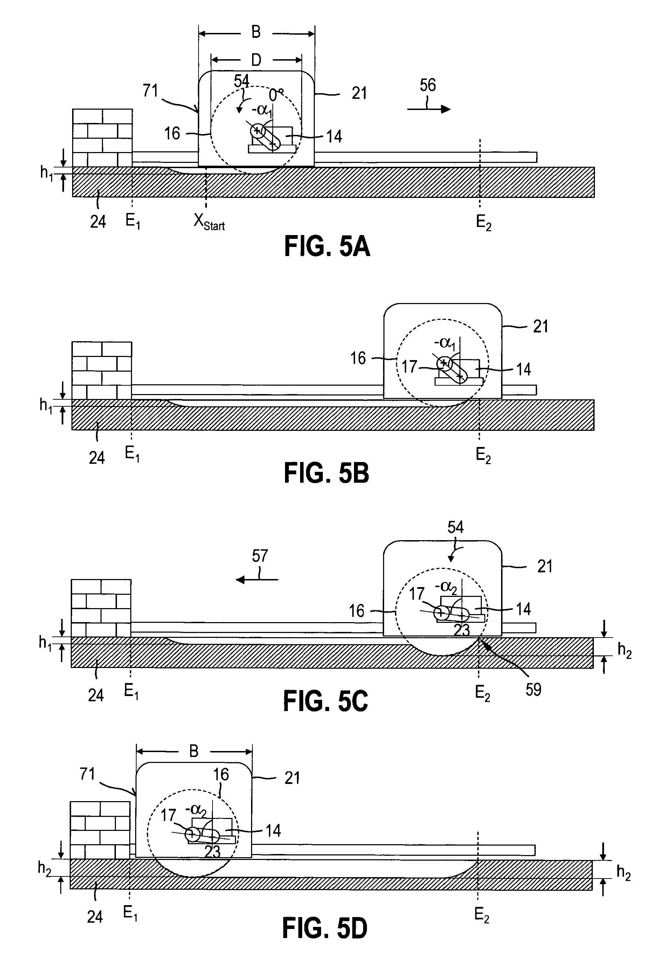

**FIGN. 5A-K** zeigen das Wandsägesystem 10 der FIG. 1 mit der Führungsschiene 11 und der Wandsäge 12 beim Erstellen eines Trennschnittes der Endtiefe T im Werkstück 24 zwischen einem ersten Endpunkt E₁, der ein Hindernis darstellt, und einem zweiten Endpunkt E₂, der einen freien Endpunkt ohne Hindernis darstellt.

Die Bearbeitung des Trennschnittes erfolgt mit Hilfe des erfindungsgemäßen Verfahrens zur Steuerung eines Wandsägesystems. Der Trennschnitt wird in einer Hauptschnittfolge von mehreren Hauptschnitten erstellt, bis die gewünschte Endtiefe T erreicht ist. Die Hauptschnittfolge umfasst einen ersten Hauptschnitt mit einem ersten Hauptschnittwinkel α₁ des Sägearms 17, einem ersten Durchmesser **D₁** und einer ersten Eindringtiefe **h₁** des verwendeten Sägeblattes, einem zweiten Hauptschnitt mit einem zweiten Hauptschnittwinkel α₂ des Sägearms 17, einem zweiten Durchmesser **D₂** und einer zweiten Eindringtiefe **h₂** des verwendeten Sägeblattes sowie einen dritten Hauptschnitt mit einem dritten Hauptschnittwinkel α₃ des Sägearms 17, einem dritten Durchmesser **D₃** und einer dritten Eindringtiefe **h₃** des verwendeten Sägeblattes.

Der erste, zweite und dritte Hauptschnitt werden im Ausführungsbeispiel vom Sägeblatt 16 mit dem Sägeblattdurchmesser D und vom Blattschutz 21 mit der Blattschutzbreite B durchgeführt. Die Durchmesser D₁, D₂, D₃ der Hauptschnitte stimmen mit dem Sägeblattdurchmesser D des Sägeblattes 16 überein, ebenso stimmen die Breiten B₁, B₂, B₃ der Hauptschnitt mit der Blattschutzbreite B des Blattschutzes 21 überein.

Die Hauptschnitte werden beim erfindungsgemäßen Verfahren mit einem Sägearm 17 durchgeführt, der abwechselnd ziehend und stoßend angeordnet wird. Die ziehende Anordnung des Sägearms 17 ermöglicht eine stabile Führung des Sägeblattes bei der Bearbeitung und einen schmalen Schnittspalt. Ein Trennschnitt, bei dem der Sägearm 17 abwechselnd ziehend und stoßend angeordnet wird, hat den Vorteil, dass die zum Positionieren des Sägekopfes 14 und Schwenken des Sägearms 17 notwendigen Nebenzeiten gegenüber einer Bearbeitung mit einem ausschließlich ziehend angeordneten Sägearm 17 reduziert sind. Im Ausführungsbeispiel wird der Sägekopf 14 beim ersten und dritten Hauptschnitt mit dem ziehend angeordneten Sägearm 17 in der positiven Vorschubrichtung 56 verfahren; beim zwischen liegenden zweiten Hauptschnitt wird der Sägekopf 14 mit dem stoßend angeordneten Sägearm 17 in der negativen Vorschubrichtung 57 verfahren. Der Sägearm 17 ist in den drei Hauptschnitten jeweils in der negativen Drehrichtung 54 angeordnet.

Die Bearbeitung des Trennschnittes beginnt am ersten Endpunkt E₁. Nach dem Start des erfindungsgemäßen Verfahrens wird der Sägekopf 14 in eine Startposition **X_{Start}** positioniert, in der die Schwenkachse 23 einen Abstand von √[h₁ · (D₁ - h₁)] - δ · sin(-α₁) zum ersten Endpunkt E₁ aufweist, wobei h₁ = h(-α₁, D₁) = D₁/2 - Δ - δ · cos(-α₁) die Eindringtiefe des verwendeten Sägeblattes in das Werkstück 24 beim negativen ersten Hauptschnittwinkel -α₁ mit dem ersten Durchmesser D₁, der dem Sägeblattdurchmesser D entspricht, bezeichnet. In der Startposition X_{Start} wird der Sägearm 17 aus der Grundposition bei 0° in der negativen Drehrichtung 54 in den negativen ersten Hauptschnittwinkel -α₁ geschwenkt. Nach der Schwenkbewegung in den negativen ersten Hauptschnittwinkel -α₁ grenzt die erste Blattschutzkante 71 des Blattschutzes 21 an das Hindernis beim ersten Endpunkt E₁. Anschließend wird der Sägekopf 14 mit dem, unter dem negativen ersten Hauptschnittwinkel -α₁, geneigten Sägearm 17 und dem rotierenden Sägeblatt 16 in der positiven Vorschubrichtung 56 verfahren (FIG. 5A). Während der Vorschubbewegung wird die Position des Sägekopfes 14 regelmäßig vom Wegsensor 33 gemessen.

Die Vorschubbewegung des Sägekopfes 14 wird angehalten, wenn die Schwenkachse 23 einen Abstand zum zweiten Endpunkt E₂ von √[h₂ · (D₂ - h₂)] + δ · sin(-α₂) aufweist, wobei h₂ = h(-α₂, D₂) = D₂/2 - Δ - δ · cos(-α₂) die Eindringtiefe des verwendeten Sägeblattes in das Werkstück 24 beim negativen zweiten Hauptschnittwinkel -α₂ mit dem zweiten Durchmesser D₂, der dem Sägeblattdurchmesser D entspricht, bezeichnet (FIG. 5B). In dieser Position wird der Sägearm 17 aus dem negativen ersten Hauptschnittwinkel -α₁ in den negativen zweiten Hauptschnittwinkel -α₂ geschwenkt (FIG. 5C). Bei der Positionierung in FIG. 5B wird der Abstand so eingestellt, dass der, dem zweiten Endpunkt E₂ zugewandte, zweite obere Austrittspunkt 59 des Sägeblattes 16 nach der Schwenkbewegung des Sägearms 17 in den negativen zweiten Hauptschnittwinkel -α₂ mit dem zweiten Endpunkt E₂ zusammenfällt.

Der Sägekopf 14 wird in der negativen Vorschubrichtung 57 auf den ersten Endpunkt E₁ zu bewegt, wobei die Position des Sägekopfes 14 während der Vorschubbewegung vom Wegsensor 33 regelmäßig gemessen wird (FIG. 5D). Die Schwenkbewegung des Sägearms 17 vom negativen zweiten Hauptschnittwinkel -α₂ in den negativen dritten Hauptschnittwinkel - α₃ erfolgt im Ausführungsbeispiel in zwei Schritten mit einem ersten Zwischenwinkel -β₁. Die Aufteilung der Schwenkbewegung in mindestens zwei Schritte reduziert die Gefahr, dass ein Polieren des Sägeblattes 16 auftritt. Ein kleinerer Schwenkwinkel führt dazu, dass die Bogenlänge des Sägeblattes, die mit dem Werkstück in Eingriff ist, reduziert wird.

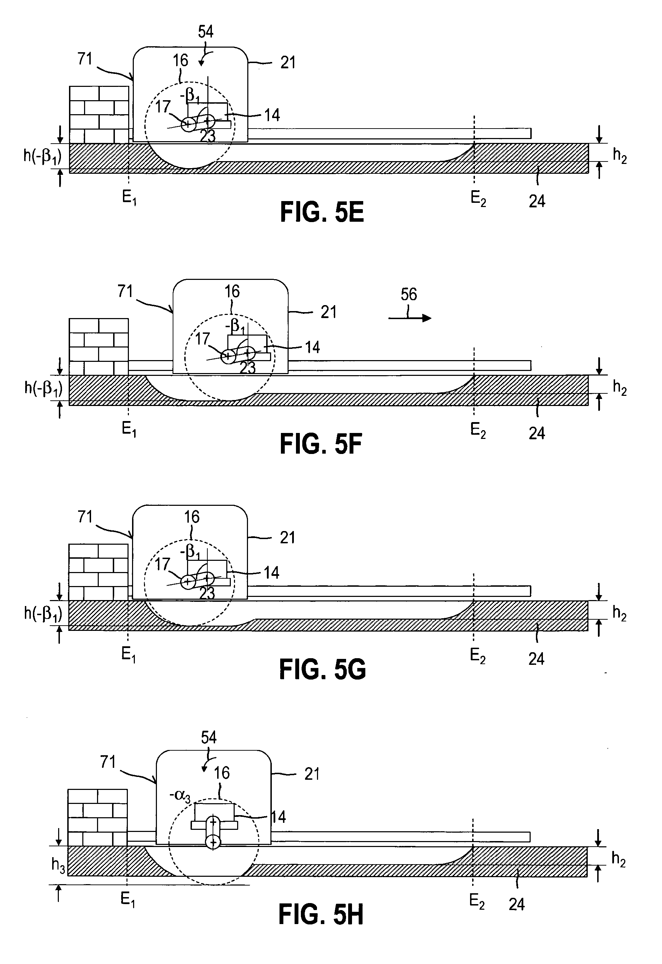

Die Vorschubbewegung des Sägekopfes 14 beim zweiten Hauptschnitt in FIG. 5D wird angehalten, wenn die Schwenkachse 23 einen Abstand von B/2 - δ · sin(-β₁) zum ersten Endpunkt E₁ aufweist, wenn der erste Zwischenwinkel -β₁ kleiner als -90° ist. Da die Schwenkbewegung am Hindernis E₁ erfolgt und der erste Zwischenwinkel -β₁ im Ausführungsbeispiel grösser als -90° ist, ist es nicht möglich, den Sägekopf 14 so zu positionieren, dass die zweite Blattschutzkante 72 nach der Schwenkbewegung in den ersten Zwischenwinkel -β₁ an das Hindernis E₁ angrenzt. Das Positionieren des Sägekopfes 14 erfolgt mittels des kritischen Winkels αₖᵣᵢₜ von -90° und der Sägearm 17 wird anschließend in den ersten Zwischenwinkel - β₁ geschwenkt (FIG. 5E). Die Schwenkachse 23 weist beim kritischen Winkel αₖᵣᵢₜ von -90° einen Abstand von B.2/2 - δ · sin(-90°) = B.2/2 + δ zum ersten Endpunkt E₁ auf. Der kritische Winkel von -90° muss berücksichtigt werden, da der erste Endpunkt E₁ bei der Schwenkbewegung nicht überschritten werden darf.

Im Ausführungsbeispiel wurde die Schwenkbewegung vom negativen ersten Hauptschnittwinkel -α₁ in den negativen zweiten Hauptschnittwinkel -α₂ in einem Schritt ausgeführt und die Schwenkbewegung vom negativen zweiten Hauptschnittwinkel -α₂ in den negativen dritten Hauptschnittwinkel -α₃ in zwei Schritten; alternativ kann die Schwenkbewegung in den negativen zweiten Hauptschnittwinkel -α₂ in mehreren Schritten erfolgen oder die Schwenkbewegung in den negativen dritten Hauptschnittwinkel -α₃ in einem Schritt. Die Entscheidung, wie viele Schritte erforderlich sind, hängt unter anderem von der Spezifikation des Sägeblattes, der Härte des Werkstoffes sowie der Leistung und dem Drehmoment des Antriebsmotors für das Sägeblatt ab. Die Zwischenwinkel können vom Bediener festgelegt werden oder die Kontrolleinheit des Wandsägesystems legt die Zwischenwinkel abhängig von verschiedenen Randbedingungen fest. Für das erfindungsgemäße Verfahren stellen die Hauptschnittwinkel der Hauptschnitte und mögliche Zwischenwinkel eine Eingangsgröße dar, die zur Steuerung der Wandsäge genutzt wird.

Nach der Schwenkbewegung des Sägearms 17 in den ersten Zwischenwinkel -β₁ erfolgt ein Freischneiden des Sägeblattes 16. Dazu wird der Sägekopf 14 mit dem, unter dem ersten Zwischenwinkel -β₁, geneigten Sägearm 17 und dem rotierenden Sägeblatt 16 in der positiven Vorschubrichtung 56 um eine Weglänge von √[h₃ · (D₃ - h₃)] verfahren (FIG. 5F), wobei h₃ = h(-α₃, D₃) = D₃/2 - Δ - δ · cos(-180°) = D₃/2 - Δ + δ die Eindringtiefe des Sägeblattes 16 in das Werkstück 24 beim negativen dritten Hauptschnittwinkel -α₃ mit dem dritten Durchmesser D₃, der dem Sägeblattdurchmesser D entspricht, bezeichnet. Nach dem Freischneiden wird der Sägekopf 14 mittels des kritischen Winkels αₖᵣᵢₜ von -90°positioniert (FIG. 5G) und der Sägearm 17 anschließend aus dem ersten Zwischenwinkel -β₁ in den negativen dritten Hauptschnittwinkel -α₃ geschwenkt (FIG. 5H).

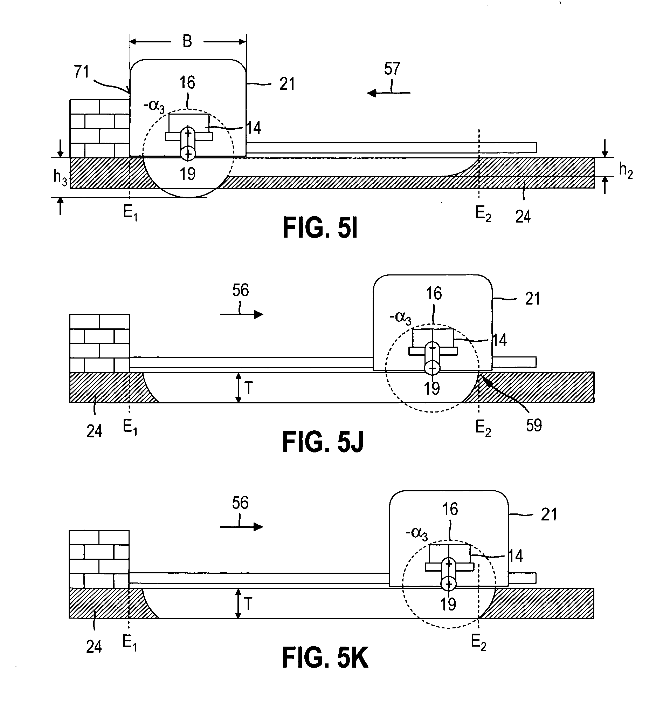

Da der dritte Hauptschnitt den letzten Hauptschnitt der Schnittfolge darstellt, erfolgt vor der Bearbeitung des letzten Hauptschnittes eine Eckenbearbeitung des ersten Endpunktes E₁. Dazu wird der Sägekopf 14 mit dem unter -α₃ geneigten Sägearm 17 in der negativen Vorschubrichtung 57 verfahren, bis die Schwenkachse 23 einen Abstand von zum ersten Endpunkt E₁ aufweist und die erste Blattschutzkante 71 des Blattschutzes 21 an das Hindernis am ersten Endpunkt E₁ angrenzt (FIG. 5i). Die Eckenbearbeitung des ersten Endpunktes E₁ kann verbessert werden, wenn der Blattschutz 21 demontiert wird und die Eckenbearbeitung ohne Blattschutz erfolgt. Ohne Blattschutz wird der Sägekopf 14 mit dem unter -α₃ geneigten Sägearm 17 in der negativen Vorschubrichtung 57 verfahren, bis die erste Sägeblattkante 61 des Sägeblattes 16 mit dem ersten Endpunkt E₁ zusammenfällt.

Bei harten Werkstoffen des Werkstückes 24 oder leistungsschwachen Antriebsmotoren 18 kann die Eckenbearbeitung am Hindernis E₁ auch in mehreren Schritten mit Zwischenwinkeln durchgeführt werden. In diesem Fall wird der Sägearm 17 nach der Schwenkbewegung in den dritten Hauptschnittwinkel -α₃ in eine Anfangsposition verfahren und in der Anfangsposition in den ersten Zwischenwinkel geschwenkt. Mit dem, unter dem ersten Zwischenwinkel geneigten, Sägearm 17 wird der Sägekopf 14 in der negativen Vorschubrichtung 57 verfahren, bis die erste Blattschutzkante 71 an das Hindernis E₁ angrenzt. Anschließend wird der Sägekopf 14 in die Anfangsposition zurückversetzt, der Sägearm 17 in den nächsten Zwischenwinkel geschwenkt und der Sägekopf 14 mit dem geneigten Sägearm 17 in der negativen Vorschubrichtung 57 verfahren, bis die erste Blattschutzkante 71 an das Hindernis E₁ angrenzt. Diese Verfahrensschritte werden wiederholt, bis der Sägekopf 14 mit dem unter dem dritten Hauptschnittwinkel -α₃ geneigten Sägearm 17 in einer Position angeordnet ist, dass die erste Blattschutzkante 71 an das Hindernis E₁ angrenzt. Auch die Eckenbearbeitung in mehreren Zwischenschritten kann ohne Blattschutz 21 durchgeführt werden.

Nach der Eckenbearbeitung des ersten Endpunktes E₁ wird der dritte Hauptschnitt mit dem, unter dem negativen dritten Hauptschnittwinkel -α₃ geneigten, Sägearm 17 in der positiven Vorschubrichtung 56 ausgeführt (FIG. 5J). Die Vorschubbewegung des Sägekopfes 14 wird angehalten, wenn die Schwenkachse 23 einen Abstand von √[h₃ · (D₃ - h₃)] + δ · sin(-α₃) zum zweiten Endpunkt E₂ aufweist, wobei h₃ = h(-α₃, D₃) = D₃/2 - Δ - δ · cos(-α₃) die Eindringtiefe des Sägeblattes in das Werkstück 24 beim negativen dritten Hauptschnittwinkel -α₃ mit dem dritten Durchmesser D₃, der dem Sägeblattdurchmesser D entspricht, bezeichnet.

Wenn am zweiten Endpunkt E₂ ein Überschnitt erlaubt ist, erfolgt nach dem dritten Hauptschnitt eine Eckenbearbeitung des zweiten Endpunktes E₂ (FIG. 5K). Bei harten Werkstoffen des Werkstückes 24 oder leistungsschwachen Antriebsmotoren 18 kann die Eckenbearbeitung am zweiten Endpunkt E₂ auch in mehreren Schritten mit Zwischenwinkeln durchgeführt werden. In diesem Fall wird der Sägearm 17 nach dem Ende des dritten Hauptschnittes in eine Anfangsposition verfahren und in der Anfangsposition in den ersten Zwischenwinkel geschwenkt. Die Anfangsposition wird so berechnet, dass die Schwenkbewegung in alle Zwischenwinkel der Eckenbearbeitung vor dem zweiten Endpunkt E₂ erfolgt und der zweite Endpunkt E₂ nicht überschritten wird. Mit dem, unter dem ersten Zwischenwinkel geneigten, Sägearm 17 wird der Sägekopf 14 in der positiven Vorschubrichtung 56 verfahren, bis der zweite obere Austrittspunkt 59 des Sägeblattes 16 eine Endposition erreicht hat, wobei der zweite obere Endpunkt 59 in der Endposition einen Abstand zum zweiten Endpunkt E₂ von √[h₃ · (D - h₃)) - √(Δh · (D - Δh)] aufweist. Dabei bezeichnen Δh = h₃ - T die Differenz zwischen der Eindringtiefe h₃ und der Endtiefe T und h₃ = h(-α₃, D) = D/2 - Δ - δ · cos(-α₃) die Eindringtiefe des Sägeblattes 16 in das Werkstück 24 beim negativen dritten Schwenkwinkel -α₃. Anschließend wird der Sägekopf 14 in die Anfangsposition zurückversetzt, der Sägearm 17 in den nächsten Zwischenwinkel geschwenkt und der Sägekopf 14 mit dem geneigten Sägearm 17 in der positiven Vorschubrichtung 56 in die Endposition verfahren. Diese Verfahrensschritte werden solange wiederholt, bis der Sägekopf 14 mit dem unter dem negativen dritten Hauptschnittwinkel -α₃ geneigten Sägearm 17 in der Endposition angeordnet ist.

## Patentansprüche

1. Verfahren zur Steuerung eines Wandsägesystems (10) umfassend eine Führungsschiene (11) und eine Wandsäge (12) mit einem Sägekopf (14), einer motorischen Vorschubeinheit (15), die den Sägekopf (14) parallel zu einer Vorschubrichtung (28) entlang der Führungsschiene (11) verschiebt, mindestens einem Sägeblatt (16), das an einem, um eine Schwenkachse (23) schwenkbaren, Sägearm (17) des Sägekopfes (14) befestigt und um eine Drehachse (19) angetrieben wird, und mindestens einem, das Sägeblatt (16) umgebenden, lösbaren Blattschutz (21) beim Erstellen eines Trennschnittes (51) der Endtiefe (T) in einem Werkstück (24) der Werkstückdicke (d) zwischen einem ersten Endpunkt (E₁) und einem zweiten Endpunkt (E₂), mit:
▪ vor dem Start einer von einer Kontrolleinheit (29) der Wandsäge (12) gesteuerten Bearbeitung des Trennschnittes werden zumindest der Sägeblattdurchmesser (D) des mindestens einen Sägeblattes (16), die Positionen des ersten und zweiten Endpunktes (E₁, E₂) in Vorschubrichtung (28), die Endtiefe (T) des Trennschnittes und eine Hauptschnittfolge von Hauptschnitten bestimmt, wobei die Hauptschnittfolge zumindest einen ersten Hauptschnitt mit einem ersten Hauptschnittwinkel (α₁) des Sägearms (17) und einem ersten Durchmesser (D₁) des beim ersten Hauptschnitt verwendeten Sägeblattes sowie einen folgenden zweiten Hauptschnitt mit einem zweiten Hauptschnittwinkel (α₂) des Sägearms (17) und einem zweiten Durchmesser (D₂) des beim zweiten Hauptschnitt verwendeten Sägeblattes umfasst,
▪ während der von der Kontrolleinheit (29) gesteuerten Bearbeitung werden
- der Sägearm (17) in einer negativen Drehrichtung (54) unter dem negativen ersten Hauptschnittwinkel (-α₁) angeordnet und
- der Sägekopf (14) in einer positiven Vorschubrichtung (56) in Richtung des zweiten Endpunktes (E₂) verfahren, wobei sich der Sägearm (17) in einer ziehenden Anordnung befindet,
**dadurch gekennzeichnet, dass** der Sägekopf (14) bei der von der Kontrolleinheit (29) gesteuerten Bearbeitung so verfahren wird, dass nach der Schwenkbewegung des Sägearms (17) in den negativen zweiten Hauptschnittwinkel (-α₂) eine, dem zweiten Endpunkt (E₂) zugewandte zweite Begrenzung (59, 62, 72) der Wandsäge (12) mit dem zweiten Endpunkt (E₂) zusammenfällt, wobei die zweite Begrenzung (59, 62, 72) der Wandsäge (12) durch einen, dem zweiten Endpunkt (E₂) zugewandten, zweiten oberen Austrittspunkt (59) des verwendeten Sägeblattes an einer Oberseite (53) des Werkstückes (24) gebildet wird, wenn der zweite Endpunkt (E₂) einen freien Endpunkt ohne Hindernis darstellt, durch eine, dem zweiten Endpunkt (E₂) zugewandte, zweite Sägeblattkante (62) des verwendeten Sägeblattes, wenn der zweite Endpunkt (E₂) ein Hindernis darstellt und die Bearbeitung ohne Blattschutz erfolgt, und durch eine, dem zweiten Endpunkt (E₂) zugewandte, zweite Blattschutzkante (72) des verwendeten Blattschutzes, wenn der zweite Endpunkt (E₂) ein Hindernis darstellt und die Bearbeitung mit Blattschutz erfolgt.

2. Verfahren nach Anspruch 1, **dadurch gekennzeichnet, dass** vor dem Start der von der Kontrolleinheit (29) gesteuerten Bearbeitung zusätzlich eine Sägearmlänge (δ) des Sägearms (17), die als Abstand zwischen der Schwenkachse (23) des Sägearms (17) und der Drehachse (19) des Sägeblattes (16) definiert ist, und ein Abstand (Δ) zwischen der Schwenkachse (23) und der Oberseite (53) des Werkstückes (24) festgelegt werden.

3. Verfahren nach Anspruch 2, **dadurch gekennzeichnet, dass** vor dem Start der gesteuerten Bearbeitung eine erste Breite (B₁) für einen, beim ersten Hauptschnitt, verwendeten Blattschutz (21) und eine zweite Breite (B₂) für einen, beim zweiten Hauptschnitt, verwendeten Blattschutz (21) festgelegt wird, wobei die erste und zweite Breite (B₁, B₂) jeweils aus einem ersten Abstand (B₁ₐ, B₂ₐ) der Drehachse (19) zur ersten Blattschutzkante (71) und einem zweiten Abstand (B_{1b}, B_{2b}) der Drehachse (19) zur zweiten Blattschutzkante (72) zusammengesetzt sind.

4. Verfahren nach einem der Ansprüche 2 bis 3, **dadurch gekennzeichnet, dass** nach der Schwenkbewegung des Sägearms (17) in den negativen zweiten Hauptschnittwinkel (-α₂) der zweite obere Austrittspunkt (59) des verwendeten Sägeblattes mit dem zweiten Endpunkt (E₂) zusammenfällt, wenn die Schwenkachse (23) einen Abstand zum zweiten Endpunkt (E₂) von √[h₂ · (D₂ - h₂)] + δ · sin(-α₂)aufweist, wobei h₂ = h(-α₂, D₂) = D₂/2 - Δ - δ · cos(-α₂) die Eindringtiefe des verwendeten Sägeblattes in das Werkstück (24) beim negativen zweiten Hauptschnittwinkel (-α₂) mit dem zweiten Durchmesser (D₂) bezeichnet, die zweite Sägeblattkante (62) des verwendeten Sägeblattes mit dem zweiten Endpunkt (E₂) zusammenfällt, wenn die Schwenkachse (23) einen Abstand zum zweiten Endpunkt (E₂) von D₂/2 + δ · sin(-α₂) aufweist, und die zweite Blattschutzkante (72) des verwendeten Blattschutzes mit dem zweiten Endpunkt (E₂) zusammenfällt, wenn die Schwenkachse (23) einen Abstand zum zweiten Endpunkt (E₂) von B_{2b} + δ · sin(-α₂) aufweist.

5. Verfahren nach einem der Ansprüche 1 bis 4, **dadurch gekennzeichnet, dass** der zweite Hauptschnitt den letzten Hauptschnitt der Hauptschnittfolge darstellt und die Wandsäge (12) in eine Endposition verfahren wird.

6. Verfahren nach Anspruch 5, **dadurch gekennzeichnet, dass** der Sägekopf (14) so verfahren wird, dass eine, dem ersten Endpunkt (E₁) zugewandte, erste Begrenzung (58, 61, 71) der Wandsäge (12) mit dem ersten Endpunkt (E₁) zusammenfällt, wobei die erste Begrenzung (58, 61, 71) der Wandsäge (12) durch einen, dem ersten Endpunkt (E₁) zugewandten, ersten oberen Austrittspunkt (58) des verwendeten Sägeblattes an der Oberseite (53) des Werkstückes (24) gebildet wird, wenn der erste Endpunkt (E₁) einen freien Endpunkt ohne Hindernis darstellt, durch eine, dem ersten Endpunkt (E₁) zugewandte, erste Sägeblattkante (61) des verwendeten Sägeblattes, wenn der erste Endpunkt (E₁) ein Hindernis darstellt und die Bearbeitung ohne Blattschutz erfolgt, und durch eine, dem ersten Endpunkt (E₁) zugewandte, erste Blattschutzkante (71) des verwendeten Blattschutzes, wenn der erste Endpunkt (E₁) ein Hindernis darstellt und die Bearbeitung mit Blattschutz erfolgt.

7. Verfahren nach Anspruch 6, **dadurch gekennzeichnet, dass** der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₂ · (D₂ - h₂)] - δ · sin(-α₂) aufweist, wobei h₂ = h(-α₂, D₂) = D₂/2 - Δ - δ · cos(-α₂) die Eindringtiefe des verwendeten Sägeblattes in das Werkstück (24) beim negativen zweiten Hauptschnittwinkel (-α₂) mit dem zweiten Durchmesser (D₂) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₂/2 - δ · sin(-α₂) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₂ₐ - δ · sin(-α₂) aufweist.

8. Verfahren nach einem der Ansprüche 1 bis 4, **dadurch gekennzeichnet, dass** die Hauptschnittfolge einen, auf den zweiten Hauptschnitt folgenden, dritten Hauptschnitt mit einem dritten Hauptschnittwinkel (α₃) des Sägearms (17), einem dritten Durchmesser (D₃) des verwendeten Sägeblattes und einer dritten Breite (B₃) des verwendeten Blattschutzes mit einem ersten und zweiten Abstand (B₃ₐ, B_{3b}) zu den Blattschutzkanten aufweist, wobei der Sägearm (17) beim dritten Hauptschnitt in einer ziehenden Anordnung angeordnet wird und der Sägekopf (14) in der positiven Vorschubrichtung (56) verfahren wird.

9. Verfahren nach Anspruch 8, **dadurch gekennzeichnet, dass** der Sägekopf (14) bei der von der Kontrolleinheit (29) gesteuerten Bearbeitung so verfahren wird, dass nach der Schwenkbewegung des Sägearms (17) in den negativen dritten Hauptschnittwinkel (-α₃) die erste Begrenzung (58, 61, 71) der Wandsäge (12) mit dem ersten Endpunkt (E₁) zusammenfällt, wobei die erste Begrenzung (58, 61, 71) durch den ersten oberen Austrittspunkt (58) des verwendeten Sägeblattes gebildet wird, wenn der erste Endpunkt (E₁) einen freien Endpunkt ohne Hindernis darstellt, durch die erste Sägeblattkante (61) des verwendeten Sägeblattes, wenn der erste Endpunkt (E₁) ein Hindernis darstellt und die Bearbeitung ohne Blattschutz erfolgt, und durch die erste Blattschutzkante (71) des verwendeten Blattschutzes, wenn der erste Endpunkt (E₁) ein Hindernis darstellt und die Bearbeitung mit Blattschutz erfolgt.

10. Verfahren nach Anspruch 9, **dadurch gekennzeichnet, dass** der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₃ · (D₃ - h₃)] - δ · sin(-α₃) aufweist, wobei h₃ = h(-α₃, D₃) = D₃/2 - Δ - δ · cos(-α₃) die Eindringtiefe des verwendeten Sägeblattes in das Werkstück (24) beim negativen dritten Hauptschnittwinkel (-α₃) mit dem dritten Durchmesser (D₃) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₃/2 - δ · sin(-α₃) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₃ₐ - δ · sin(-α₃) aufweist.

11. Verfahren nach einem der Ansprüche 1 bis 10, **dadurch gekennzeichnet, dass** der erste und zweite Hauptschnitt mit einem Sägeblatt (16) und einem Blattschutz (21) durchgeführt werden.

12. Verfahren nach einem der Ansprüche 1 bis 10, **dadurch gekennzeichnet, dass** der erste Hauptschnitt von einem ersten Sägeblatt (16.1) und einem ersten Blattschutz (21.1) durchgeführt wird, wobei das erste Sägeblatt (16.1) einen ersten Sägeblattdurchmesser (D.1) und der erste Blattschutz (21.1) eine erste Blattschutzbreite (B.1) aufweisen, und der zweite Hauptschnitt mit einem zweiten Sägeblatt (16.2) und einem zweiten Blattschutz (21.2) durchgeführt wird, wobei das zweite Sägeblatt (16.2) einen zweiten Sägeblattdurchmesser (D.2) und der zweite Blattschutz (21.2) eine zweite Blattschutzbreite (B.2) aufweisen.

13. Verfahren nach einem der Ansprüche 1 bis 12, **dadurch gekennzeichnet, dass** der erste Hauptschnitt der Hauptschnittfolge einen Vorschnitt darstellt und der Sägekopf (14) nach dem Start der von der Kontrolleinheit (29) gesteuerten Bearbeitung parallel zur Vorschubrichtung (28) in eine Startposition (X_{Start}) positioniert wird, wobei in der Startposition (X_{Start}) die, dem ersten Endpunkt (E₁) zugewandte erste Begrenzung (58, 61, 71) der Wandsäge (12) nach der Schwenkbewegung in den negativen ersten Hauptschnittwinkel (-α₁) mit dem ersten Endpunkt (E₁) zusammenfällt, wobei die erste Begrenzung (58, 61, 71) durch den ersten oberen Austrittspunkt (58) des verwendeten Sägeblattes gebildet wird, wenn der erste Endpunkt (E₁) einen freien Endpunkt ohne Hindernis darstellt, durch die erste Sägeblattkante (61) des verwendeten Sägeblattes, wenn der erste Endpunkt (E₁) ein Hindernis darstellt und die Bearbeitung ohne Blattschutz erfolgt, und durch die erste Blattschutzkante (71) des verwendeten Blattschutzes, wenn der erste Endpunkt (E₁) ein Hindernis darstellt und die Bearbeitung mit Blattschutz erfolgt.

14. Verfahren nach Anspruch 13, **dadurch gekennzeichnet, dass** in der Startposition (X_{Start}) der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück (24) beim negativen ersten Hauptschnittwinkel (-α₁) mit dem ersten Durchmesser (D₁) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₁/2 - δ · sin(-α₁) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₁ₐ - δ · sin(-α₁) aufweist.

15. Verfahren nach einem der Ansprüche 1 bis 12, **dadurch gekennzeichnet, dass** die Hauptschnittfolge einen, vor dem ersten Hauptschnitt durchzuführenden Vorschnitt mit einem nullten Hauptschnittwinkel (α₀) des Sägearms (17), einem nullten Durchmesser (D₀) und einer nullten Breite (B₀) mit einem ersten und zweiten Abstand (B₀ₐ, B_{0b}) zu den Blattschutzkanten umfasst, wobei der Sägearm (17) beim Vorschnitt in einer ziehenden Anordnung angeordnet wird und der Sägekopf (14) in der negativen Vorschubrichtung (57) verfahren wird.

16. Verfahren nach Anspruch 15, **dadurch gekennzeichnet, dass** der Sägekopf (14) nach dem Start der von der Kontrolleinheit (29) gesteuerten Bearbeitung parallel zur Vorschubrichtung (28) für den Vorschnitt in eine Startposition (X_{Start}) positioniert wird, wobei in der Startposition (X_{Start}) die, dem zweiten Endpunkt (E₂) zugewandte, zweite Begrenzung (59, 62, 72) der Wandsäge (12) nach der Schwenkbewegung in den positiven nullten Hauptschnittwinkel (+α₀) mit dem zweiten Endpunkt (E₂) zusammenfällt.

17. Verfahren nach Anspruch 16, **dadurch gekennzeichnet, dass** nach der Schwenkbewegung des Sägearms (17) in den positiven nullten Hauptschnittwinkel (+α₀) der zweite obere Austrittspunkt (58) des verwendeten Sägeblattes mit dem zweiten Endpunkt (E₂) zusammenfällt, wenn die Schwenkachse (23) einen Abstand zum zweiten Endpunkt (E₂) von √[h₀ · (D₀ - h₀)] + δ · sin(+α₀) aufweist, wobei h₀ = h(+α₀, D₀) = D₀/2 - Δ - δ · cos(+α₀) die Eindringtiefe des verwendeten Sägeblattes in das Werkstück (24) beim positiven nullten Hauptschnittwinkel (+α₀) mit dem nullten Durchmesser (D₀) bezeichnet, die zweite Sägeblattkante (62) des verwendeten Sägeblattes mit dem zweiten Endpunkt (E₂) zusammenfällt, wenn die Schwenkachse (23) einen Abstand zum zweiten Endpunkt (E₂) von D₀/2 + δ · sin(+α₀) aufweist, und die zweite Blattschutzkante (72) des verwendeten Blattschutzes mit dem zweiten Endpunkt (E₂) zusammenfällt, wenn die Schwenkachse (23) einen Abstand zum zweiten Endpunkt (E₂) von B_{0b} + δ · sin(+α₀) aufweist.

18. Verfahren nach Anspruch 17, **dadurch gekennzeichnet, dass** der Sägekopf (14) bei der gesteuerten Bearbeitung in der positiven Vorschubrichtung (56) angehalten wird, wenn die erste Begrenzung (58, 61, 71) der Wandsäge (12) mit dem ersten Endpunkt (E₁) zusammenfällt, wobei die erste Begrenzung (58, 61, 71) der Wandsäge (12) durch den ersten oberen Austrittspunkt (58) des verwendeten Sägeblattes an der Oberseite (53) des Werkstückes (24) gebildet wird, wenn der erste Endpunkt (E₁) einen freien Endpunkt ohne Hindernis darstellt, durch die erste Sägeblattkante (61) des verwendeten Sägeblattes, wenn der erste Endpunkt (E₁) ein Hindernis darstellt und die Bearbeitung ohne Blattschutz erfolgt, und durch die erste Blattschutzkante (71) des verwendeten Blattschutzes, wenn der erste Endpunkt (E₁) ein Hindernis darstellt und die Bearbeitung mit Blattschutz erfolgt.

19. Verfahren nach Anspruch 18, **dadurch gekennzeichnet, dass** der Sägekopf (14) in der positiven Vorschubrichtung (56) so positioniert wird, dass die erste Begrenzung (58, 61, 71) der Wandsäge (12) nach der Schwenkbewegung des Sägearms (17) in den negativen ersten Hauptschnittwinkel (-α₁) mit dem ersten Endpunkt (E₁) zusammenfällt, wobei der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₁ · (D₁ - h₁)] + δ · sin(-α₁) aufweist, wobei h₁ = h(-α₁, D₁) = D₁/2 - Δ - δ · cos(-α₁) die Eindringtiefe des verwendeten Sägeblattes in das Werkstück (24) beim negativen ersten Hauptschnittwinkel (-α₁) mit dem ersten Durchmesser (D₁) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₁/2 + δ · sin(-α₁) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₁ₐ + δ · sin(-α₁) aufweist.

20. Verfahren nach Anspruch 17, **dadurch gekennzeichnet, dass** der Sägekopf (14) so verfahren wird, dass nach der Schwenkbewegung des Sägearms (17) in den negativen nullten Hauptschnittwinkel (-α₀) die erste Begrenzung (58, 61, 71) der Wandsäge (12) mit dem ersten Endpunkt (E₁) zusammenfällt, wobei der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₀ · (D₀ - h₀)] - δ · sin(-α₀) aufweist, wobei h₀ = h(-α₀, D₀) = D₀/2 - Δ - δ · cos(-α₀) die Eindringtiefe des verwendeten Sägeblattes in das Werkstück (24) beim negativen nullten Hauptschnittwinkel (-α₀) mit dem nullten Durchmesser (D₀) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₀/2 - δ · sin(-α₀) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₀ₐ - δ · sin(-α₀) aufweist.

21. Verfahren nach Anspruch 20, **dadurch gekennzeichnet, dass** der Sägekopf (14) in der positiven Vorschubrichtung (56) um eine Weglänge von mindestens 2δ · |sin(-α₀)| verfahren wird und der Sägekopf (14) anschließend so positioniert wird, dass die erste Begrenzung (58, 61, 71) der Wandsäge (12) nach der Schwenkbewegung des Sägearms (17) in den negativen ersten Hauptschnittwinkel (-α₁) mit dem ersten Endpunkt (E₁) zusammenfällt, wobei der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück (24) beim negativen ersten Hauptschnittwinkel (-α₁) mit dem ersten Durchmesser (D₁) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₁/2 - δ · sin(-α₁) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₁ₐ - δ · sin(-α₁) aufweist.

22. Verfahren nach Anspruch 20, **dadurch gekennzeichnet, dass** der Sägekopf (14) in der positiven Vorschubrichtung (56) so verfahren wird, dass die erste Begrenzung (58, 61, 71) der Wandsäge (12) nach der Schwenkbewegung des Sägearms (17) in den negativen ersten Hauptschnittwinkel (-α₁) mit dem ersten Endpunkt (E₁) zusammenfällt, wobei der erste obere Austrittspunkt (58) des verwendeten Sägeblattes mit dem ersten Endpunkt (E₁) zusammenfällt, wenn die Schwenkachse (23) einen Abstand zum ersten Endpunkt (E₁) von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück (24) beim negativen ersten Hauptschnittwinkel (-α₁) mit dem ersten Durchmesser (D₁) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₁/2 - δ · sin(-α₁) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₁ₐ - δ · sin(-α₁) aufweist.

23. Verfahren nach Anspruch 18, **dadurch gekennzeichnet, dass** der Sägekopf (14) so verfahren wird, dass nach der Schwenkbewegung des Sägearms (17) in den negativen ersten Hauptschnittwinkel (-α₁) die erste Begrenzung (58, 61, 71) der Wandsäge (12) mit dem ersten Endpunkt (E₁) zusammenfällt, wobei der erste obere Austrittspunkt (58) des verwendeten Sägeblattes mit dem ersten Endpunkt (E₁) zusammenfällt, wenn die Schwenkachse (23) in Vorschubrichtung (28) einen Abstand zum ersten Endpunkt (E₁) von √[h₁ · (D₁ - h₁)] - δ · sin(-α₁) aufweist, wobei h₁ = h(-α₁, D₁) = D₁/2 - Δ - δ · cos(-α₁) die Eindringtiefe des verwendeten Sägeblattes in das Werkstück (24) beim negativen ersten Hauptschnittwinkel (-α₁) mit dem ersten Durchmesser (D₁) bezeichnet, die erste Sägeblattkante (61) des verwendeten Sägeblattes mit dem ersten Endpunkt (E₁) zusammenfällt, wenn die Schwenkachse (23) einen Abstand zum ersten Endpunkt (E₁) von D₁/2 - δ sin(-α₁) aufweist, und die erste Blattschutzkante (71) des verwendeten Blattschutzes mit dem ersten Endpunkt (E₁) zusammenfällt, wenn die Schwenkachse (23) einen Abstand zum ersten Endpunkt (E₁) von B₁ₐ - δ · sin(-α₁) aufweist.
